# EUROPEAN PATENT APPLICATION

(11) **EP 3 096 562 A1**
(43) Date of publication of application: **23.11.2016**
(21) Application number: 15737263.2
(22) Date of filing: 16.01.2015
(51) Int. Cl.: H04W 48/12, H04B 7/10, H04W 72/04

(54) **BASE STATION, USER EQUIPMENT, INTERFERENCE REDUCTION CONTROL INFORMATION NOTIFICATION METHOD, AND INTERFERENCE REDUCTION METHOD**

(30) Priority: 17.01.2014 JP 2014006616; 20.03.2014 JP 2014059257
(71) Applicant: NTT DOCOMO, INC., Chiyoda-ku Tokyo 100-6150 (JP)
(72) Inventor: SANO, Yousuke, Tokyo 100-6150 (JP); OHWATARI, Yusuke, Tokyo 100-6150 (JP); TAKEDA, Kazuaki, Tokyo 100-6150 (JP); NAGATA, Satoshi, Tokyo 100-6150 (JP)
(74) Representative: Hoffmann Eitle
(86) International application number: PCT/JP2015/051067
(87) International publication number: WO 2015/108145

(57) **Abstract**

A base station configured to communicate with a user apparatus in a radio communication system executing carrier aggregation, including: a reception unit configured to receive, from an interference base station, control information that is used for the user apparatus to reduce an interference signal from the interference base station for a component carrier used by the user apparatus; a determination unit configured to determine whether a connecting cell corresponding to the component carrier and an interference cell formed by the interference base station satisfy a predetermined condition; and a transmission unit configured, when the determination unit determines that the connecting cell and the interference cell satisfy the predetermined condition, to transmit the control information to the user apparatus.

## Description

### TECHNICAL FIELD

The present invention relates to a base station and a user apparatus in a radio communication system.

### BACKGROUND ART

In LTE (Long Term Evolution) Advanced in 3GPP (Third Generation Partnership Project), OFDMA (Orthogonal Frequency Division Multiplexing Access) using MU-MIMO (multi-user multiple-input multiple-output) is proposed. In downlink transmission of MU-MIMO, one base station can communicate with a plurality of user apparatuses, and in addition to that, the base station can also transmit different data streams (layers) to one user apparatus at the same time.

Also, in the LTE-Advanced, in the downlink communication, various techniques are considered for reducing (suppressing, removing, for example), at the user apparatus, interference of an interference radio beam from an interference base station against a desired radio beam from a connecting base station, and interference of signals to other users at the connecting base station.

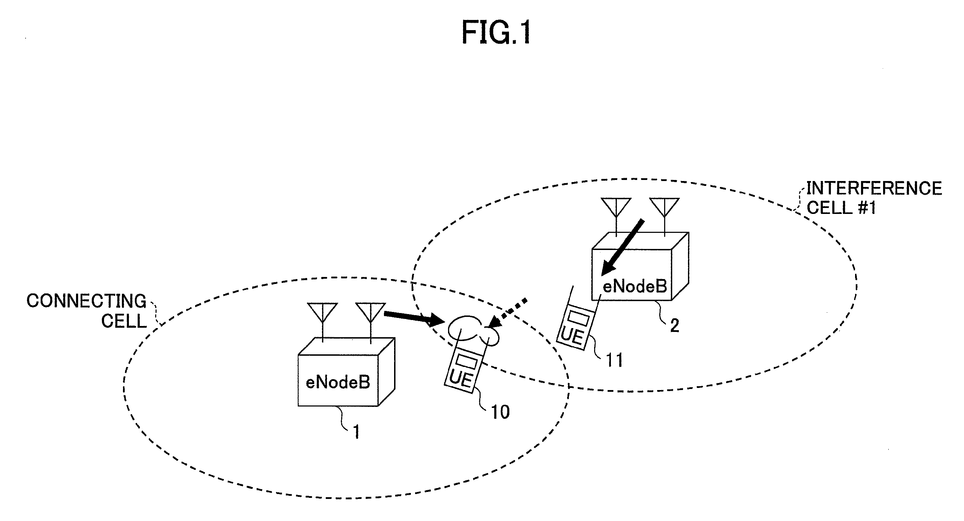

In the technique for reducing such interferences, for example, as shown in Fig. 1, in a case where a user apparatus 10 resides near a border of a connecting cell (cell of a connecting base station 1, serving cell), so the user apparatus 10 strongly receives an interference radio beam from another base station 2 (interference base station) adjacent to the desired base station 1, the user apparatus 10 can improve reception quality of the desired signal carried on a desired radio beam by performing interference reduction processing. In Fig. 1, a beam generated by the interference base station 2, that is, a part of beams for a downlink channel to other user apparatus (user apparatus 11, for example) becomes an interference signal for the user apparatus 10. Fig. 1 especially shows interference from an interference cell.

### RELATED ART DOCUMENT

### [NON-PATENT DOCUMENT]

Non-Patent Document 1: 3GPP,R1-124010,Section 6.10.5.1
Non-Patent Document 2: P.Hoeher et.al.,"Two-dimensional pilot-symbol-aided channel estimation by Wiener filtering," Proc.ICASSP'97,1997
Non-Patent Document 3: 3GPP TS 36.300 V11.3.0 (2012-09)

### SUMMARY OF THE INVENTION

### PROBLEM TO BE SOLVED BY THE INVENTION

Since the present application targets at an interference reduction technique in a radio communication system in which carrier aggregation (CA) is performed, outlines of a technique for interference reduction such as interference suppression and removal and the like in a conventional technique, and a carrier aggregation technique are described, and also, a problem to be solved by the present invention is described.

### <On interference reduction technique>

There is a technique called Interference Rejection Combining (IRC: Interference Rejection Combining) as one of techniques for separating a desired signal from a received signal that includes an interference signal and the desired signal to obtain the desired signal. The interference rejection combining (IRC) is a technique for weighting (reception weights) signals that are obtained by each reception antenna in the user apparatus so as to suppress, in the user apparatus, interference of the interference radio beam from the interference base station against the desired radio beam from the connecting base station, and the interference by signals for other users at the connecting base station in the downlink communication. For example, in the case shown in Fig. 1, the user apparatus 10 performs directivity control (weight control) to direct a beam to a desired signal from the connecting base station 1, and direct null to an interference signal from the interference base station 2 so as to perform interference rejection.

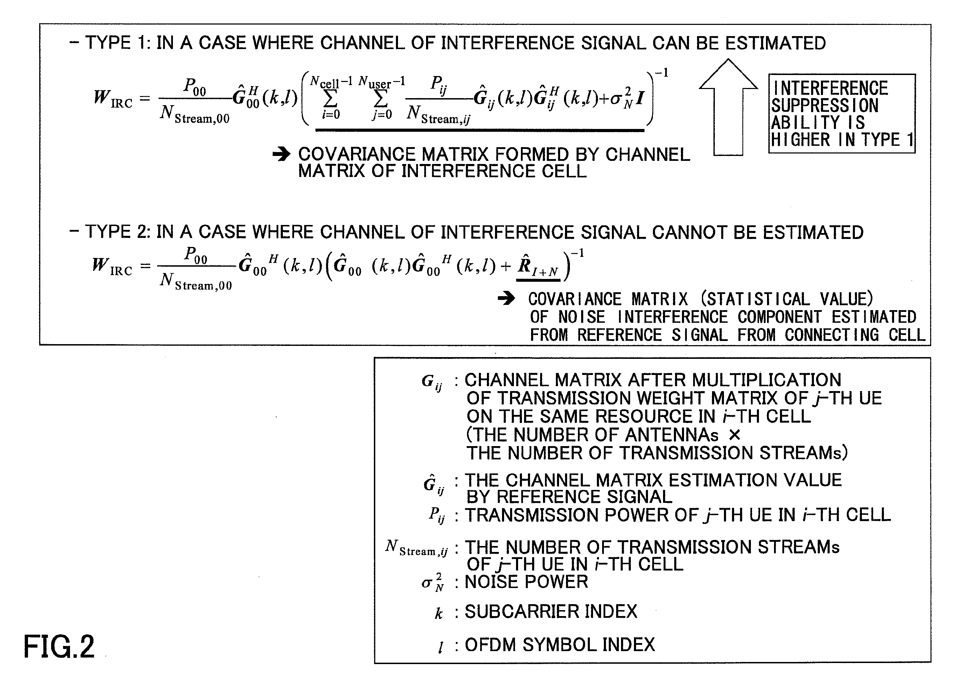

As shown in Fig. 2, in the IRC reception technique, there are two types (Type 1, Type 2) of methods for calculating reception weights, which are a type for a case where the channel of the interference signal can be estimated, and a type for a case where the estimation of the channel of the interference signal is impossible. By the way, each of the equations shown in Fig. 2 is an equation derived from an MMSE (Minimum Mean Squared Error) algorithm. Also, the technique for calculating reception weights using these equations is an existing technique in itself.

As shown in Fig. 2, in the equation of Type 1 for the case where channel estimation of the interference signal is possible, the underlined part is a covariance matrix formed by a channel matrix of the interference cell. Also, in the equation of Type 2 for the case where channel estimation of the interference signal is impossible, the underlined part is a covariance matrix (statistical amount) of noise interference components estimated by a received signal from the connecting cell (cell formed by the connecting base station, a serving cell). In the present application, in the case of IRC, the type 1 by which interference reduction ability is high is targeted at.

In addition to IRC, there is a technique of successive interference cancellation (SIC: successive interference cancellation) as a technique for separating a desired signal from a received signal including an interference signal and the desired signal.

The successive interference cancellation is a technique for generating a replica signal by performing hard decision or soft decision for the interference signal from the received signal, and successively subtracting (removing) the replica signal from the received signal so as to extract a desired signal. In SIC, for each of a plurality of interference signals, the user apparatus performs channel estimation of the interference signal, demodulates the interference signal based on the channel estimation, generates a replica of the interference signal, and successively subtracts the interference signal from the received signal.

Further, as another example of a technique for performing interference reduction, there is a maximum likelihood (ML: Maximum Likelihood) estimation technique. In the maximum likelihood estimation, a maximum likelihood detector (MLD: Maximum Likelihood Detector) in the user apparatus performs channel estimation for a desired signal and an interference signal so as to extract them simultaneously (simultaneous detection). For performing simultaneous detection, the MLD calculates likelihood for every combination of signal points of the desired signal and the interference signal, and determines a combination of signal points of the highest likelihood to be signals transmitted from each base station. In the maximum likelihood estimation, a Euclidean distance is calculated between a received signal expected from a combination of signal points and an actual received signal, so as to determine a received signal that is the nearest to the actual received signal (likelihood is the highest) to be a transmission signal from among all combinations of signal points.

In order for the user apparatus to perform interference reduction processing for a desired signal in the connecting cell by using the above-mentioned various interference reduction techniques, it is necessary to perform channel estimation and the like of an interference signal received from the interference cell. For that, it is necessary to ascertain various control information in the interference cell.

### <On carrier aggregation>

In LTE-Advanced, in order to realize throughput exceeding LTE while maintaining backward compatibility with LTE, carrier aggregation (CA: carrier aggregation) for performing communication by simultaneously using a plurality of carriers is adopted, in which a bandwidth (20 MHz at the maximum) supported in LTE is used as a basic unit. In carrier aggregation, a carrier that is a basic unit is called a component carrier (CC: Component Carrier).

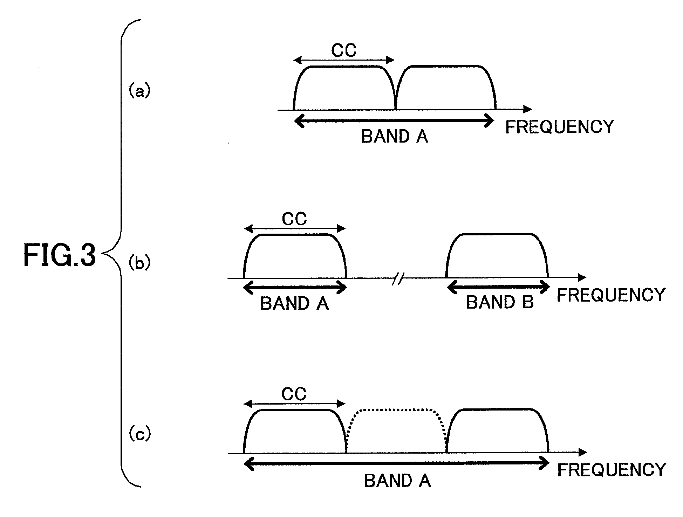

The carrier aggregation is classified into three scenarios as shown in Fig. 3 (a)-(c) according to frequency arrangement of CCs. Fig. 3 (a) is Intra-band contiguous CA, which is a scenario in which contiguous CCs are arranged in a frequency band. This scenario is applied, for example, when assignment of wideband such as 3.5 GHz band is performed. Fig. 3 (b) is Inter-band non-contiguous CA, which is a scenario in which a plurality of CCs of different frequency bands are arranged. This scenario is applied, for example, when communication is performed using two carriers of 2GHz band and 1.5GHz band. Fig. 3 (c) is Intra-band non-contiguous CA, which is a scenario in which non-contiguous CCs are arranged in the same frequency band. This scenario is applied, for example, in a case where assignment of frequency bands to operators is fragmentary, or the like.

In downlink to which carrier aggregation is applied, OFDMA in which a CC is a basic unit is adopted. Also, in a physical downlink shared channel (PDSCH: Physicak Downlink Shared Channel), AMC (Adaptive Modulation and Coding) and HARQ (Hybrid Automatic Repeat reQuest) are performed for each transport block (TB), where each transport block is mapped to only one CC. That is, a transport block which is a unit of coding and retransmission corresponds to a CC in a one-to-one correspondence manner.

In a case where CA is adopted, communication is performed between a user apparatus and a base station by using a plurality of CCs simultaneously. Also in this case, like LTE Rel.8, a single RRC connection is established between the user apparatus and the base station. After the RRC connection is established in a single CC, CCs after a second CC are added according to an instruction from the base station.

The CC in which the first RRC connection is established is called a PCC (Primary CC), and a cell corresponding to the PCC is called a Pcell (Primary cell). A CC after the second CC is called an SCC (Secondary CC), and a cell corresponding to the SCC is called an Scell (Secondary cell).

As described above, since only Pcell has the RRC connection, information that should be transmitted by an RRC signaling is transmitted from the Pcell not only for the Pcell but also for the Scell. However, it is not limited to this.

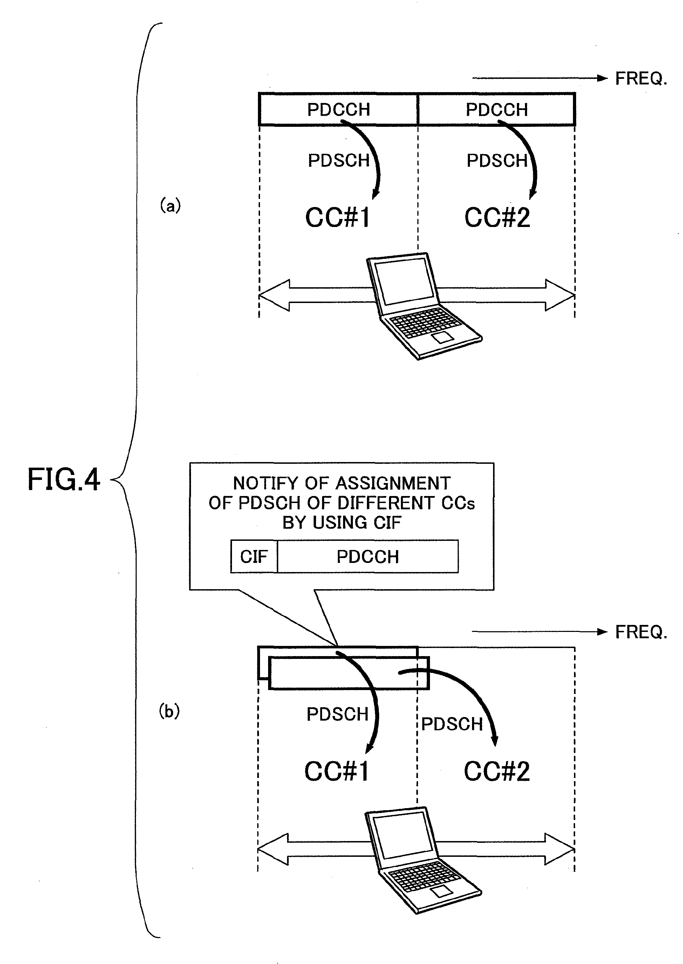

As to a PDSCH and a PDCCH, basically, scheduling is performed for each CC as shown in Fig. 4 (a), so that data transmission is performed. However, as shown in Fig. 4 (b), a PDCCH can be transmitted from a CC for scheduling of another CC. For enabling the scheme shown in Fig. 4 (b), CIF (Carrier Indicator Field) is defined for indicating which CC assignment information is for.

### <Explanation of problem>

As described before, in order for the user apparatus to perform interference reduction processing for a desired signal in a connecting cell by using an interference reduction technique of high interference reduction ability, it is necessary to perform channel estimation of an interference signal received from an interference cell. For performing it, it is necessary to ascertain various control information in the interference cell. It is considered that the control information is notified to the user apparatus from the base station that ascertains control information of the interference cell.

However, when carrier aggregation is applied, if control information of all interference cells (interference CCs) is transmitted for each CC, overhead in transmission band and in processing increases so that a problem occurs in which interference reduction processing cannot be performed efficiently, or the like.

The present invention is contrived in view of the above-mentioned points, and an object of the present invention is to provide a technique that enables to perform interference reduction processing efficiently in a radio communication system in which carrier aggregation is performed.

### MEANS FOR SOLVING THE PROBLEM

According to an embodiment of the present invention, there is provided a base station configured to communicate with a user apparatus in a radio communication system executing carrier aggregation, including:
a reception unit configured to receive, from an interference base station, control information that is used for the user apparatus to reduce an interference signal from the interference base station for a component carrier used by the user apparatus;
a determination unit configured to determine whether a connecting cell corresponding to the component carrier and an interference cell formed by the interference base station satisfy a predetermined condition; and
a transmission unit configured, when the determination unit determines that the connecting cell and the interference cell satisfy the predetermined condition, to transmit the control information to the user apparatus.

Also, according to an embodiment of the present invention, there is provided a user apparatus in a radio communication system that includes a plurality of base stations and that executes carrier aggregation, including:
a reception unit configured to receive, from a connecting base station that communicates with the user apparatus, control information that is used for reducing an interference signal from an interference base station for a component carrier in the carrier aggregation; and
an interference reduction unit configured to reduce the interference signal by using the control information to obtain a desired signal transmitted by using the component carrier.

### EFFECT OF THE PRESENT INVENTION

According to an embodiment of the present invention, there is provided a technique that enables to perform interference reduction processing efficiently in a radio communication system in which carrier aggregation is performed.

### BRIEF DESCRIPTION OF THE DRAWINGS

Fig. 1 is a diagram for explaining reduction of interference from an interference cell;
Fig. 2 is a diagram for explaining interference rejection combining (IRC) reception;
Fig. 3 is a diagram showing a frequency arrangement example in carrier aggregation;
Fig. 4 is a diagram showing extension of PDCCH in carrier aggregation;
Fig. 5 is a diagram for explaining an interference signal;
Fig. 6 is a flowchart for explaining an outline of channel estimation processing for IRC weight calculation;
Fig. 7 is a diagram showing a mapping example of CRS;
Fig. 8 is a diagram showing necessary information for performing channel estimation by using CRS;
Fig. 9 is a diagram showing necessary information for performing channel estimation by using CSI-RS;
Fig. 10 is a diagram showing necessary information for performing channel estimation by using DM-RS;
Fig. 11 is a diagram showing information necessary for demodulation of an interference signal in information necessary for SIC;
Fig. 12 is a schematic block diagram of a radio communication system of an embodiment of the present invention;
Fig. 13 is a diagram for explaining a case where a connecting cell is synchronized with an interference cell;
Fig. 14 is a diagram for explaining a case where a connecting cell is not synchronized with an interference cell;
Fig. 15 is a diagram showing a concrete system configuration example in a first example;
Fig. 16 is a diagram showing a state of carriers in a connecting cell and an interference cell;
Fig. 17 is a diagram showing information that is transmitted by DCI and information that is transmitted by RRC in interference reduction necessary information for IRC reception processing;
Fig. 18 is a diagram showing information that is transmitted by DCI and information that is transmitted by RRC in interference reduction necessary information for SIC reception processing;
Fig. 19 is a diagram showing information that is essential for notification, and information that is not essential (arbitrary) for notification, for channel estimation of interference signals in interference reduction processing;
Fig. 20 is a sequence example 1 of notification of interference control information;
Fig. 21 is a sequence example 2 of notification of interference control information;
Fig. 22 is a diagram showing a DCI format example;
Fig. 23 is a diagram for explaining an example of DCI information replacement;
Fig. 24 is a diagram for explaining an example of DCI information replacement;
Fig. 25 is a diagram for explaining ZP CSI-RS;
Fig. 26 is a flowchart of processes for PMI estimation executed by the user apparatus;
Fig. 27 is a diagram showing an example of reduction of granularity of PMI;
Fig. 28 is a diagram showing a concrete system configuration example (1) in a second example;
Fig. 29 is a diagram showing a concrete system configuration example (2) in the second example;
Fig. 30 is a system block diagram in an embodiment of the present invention (in the case where an RRC connection is established only with a Pcell);
Fig. 31 is a sequence diagram for explaining operation of the system;
Fig. 32 is a system block diagram in an embodiment of the present invention (in the case where an RRC connection is established also with an Pcell);
Fig. 33 is a sequence diagram for explaining operation of the system;
Fig. 34 is a diagram showing another configuration example of a base station; and
Fig. 35 is a diagram showing another configuration example of a user apparatus.

### EMBODIMENTS FOR CARRYING OUT THE INVENTION

In the following, embodiments of the present invention are described with reference to figures. The embodiments described below are merely examples, and the embodiments to which the present invention is applied are not limited to the embodiments below.

In the current control signal configuration of LTE-Advanced, since there is lacking information in a user apparatus for performing interference reduction processing of high interference reduction ability such as IRC and SIC and the like, it is difficult for the user apparatus to perform interference reduction processing. Thus, in an embodiment of the present invention, basically, the user apparatus is notified of control information necessary for performing interference reduction processing from the NW side.

Especially, in the present embodiment, it is presupposed that carrier aggregation (CA) is performed, and, in order to perform interference reduction processing in units of CC efficiently in an environment where carrier aggregation is performed, the base station determines whether the user apparatus should perform interference reduction processing for each CC so as to notify the user apparatus of interference control information for a CC for which interference reduction processing should be performed.

### (On control information necessary for interference reduction processing)

As described above, in the present embodiment, it is a basic operation that the base station notifies the user apparatus of control information in an interference cell that is necessary for the user apparatus to perform interference reduction processing. Thus, first, information that is necessary for performing interference reduction processing is described. In the following, information that is necessary for performing interference reduction processing is referred to as interference control information. Also, interference control information of IRC is referred to as IRC necessary information, and interference control information of SIC is referred to as SIC necessary information. In the following, as an example, although description is provided for IRC and SIC, necessary information for performing MLD is the same as SIC necessary information. "IRC" hereinafter indicates "IRC Type 1".

### <IRC necessary information>

For generating IRC reception weights, a channel matrix for the interference signal is necessary in addition to channel information of the desired signal. The channel matrix can be obtained by estimating a channel by using a reference signal from the interference cell. In a case where precoding transmission is performed in the base station side, the channel matrix needs to be a channel matrix of a channel to which precoding has been applied (multiplied by a precoding matrix).

In the LTE-Advanced, as reference signals that can be used for channel estimation, there are CRS (Cell-specific Reference Signal), CSI-RS (CSI Reference Signal), and DM-RS (DeModulation Reference Signal, or UE specific Reference Signal).

Since CRS is transmitted in any TM (Transmission Mode), channel estimation by CRS is possible for any TM. However, since precoding transmission is not performed for CRS, only channel estimation without precoding information (PMI: Precoding Matrix Identifier) is possible. That is, when preceding transmission is performed in the base station side, PMI is separately necessary for obtaining a target channel matrix.

TM (Transmission Mode) is a transmission mode in multiple antenna transmission in LTE. Configurations of reference signals and presence or absence of precoding are different for each TM. For example, TM3 is for closed loop type transmission diversity (no precoding) in which data is demodulated by using CRS. TM4 is for closed loop type transmission diversity (precoding is performed) in which data is demodulated by using CRS. TM9 and TM10 are for space multiplexing (there is precoding) in which data is demodulated by using DM-RS.

CSI-RS (CSI Reference Signal) is a reference signal for channel quality measurement introduced from Rel.10 of LTE (TM9 is introduced in Rel.10). CSI-RS is multiplexed for each antenna for transmission. CRS transmitted from the base station supports up to four transmission antennas (4 layer multiplexing) at the maximum. On the other hand, CSI-RS supports eight transmission antennas (eight layer multiplexing) at the maximum. For example, in a case where the base station performs eight antenna transmission, channel estimation is performed using CSI-RS. Also, in a case where Antenna Virtualization of CRS (decreasing the number of antennas for transmitting CRS in order to reduce density of reference signals) is applied, when channel estimation by CRS cannot be performed for all antennas, channel estimation is performed using CSI-RS. As is the case of CRS, since precoding transmission is not performed for CSI-RS, only channel estimation without PMI is possible. That is, if precoding transmission is performed in the base station side, PMI is necessary for obtaining the target channel matrix.

DM-RS is a demodulation reference signal for PDSCH (Physical Downlink Shared Channel, channel for carrying data signal to UEs), and DM-RS is precoded and transmitted like a signal of the PDSCH. Therefore, by performing channel estimation using DM-RS, a channel with precoding information (PMI) can be directly estimated.

In a case where the channel matrix is obtained by performing channel estimation for the interference signal using CRS or CSI-RS, user assignment information in the interference signal is necessary in addition to the channel matrix in order to generate IRC reception weights. The reason is as follows.

For a user apparatus in a connecting cell, when a user is assigned to PDSCH in an interference cell, the signal of the PDSCH becomes an interference signal. Therefore, a user apparatus performing IRC calculates IRC weights so as to direct null only to the interference signal (signal of PDSCH) that is assigned to a user.

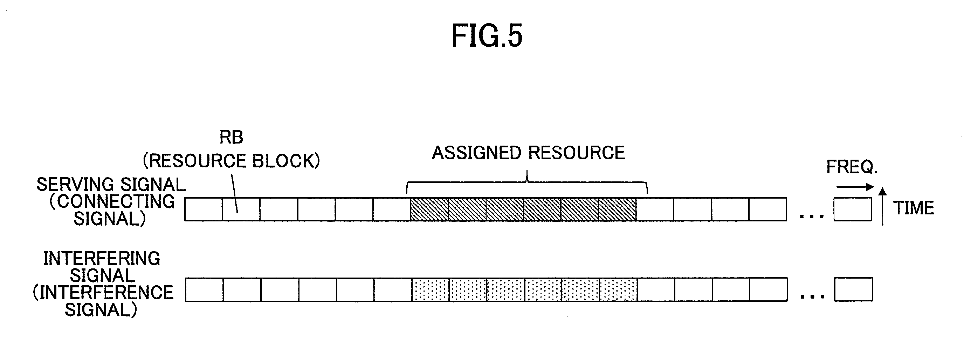

That is, as shown in Fig. 5, a signal from the interference cell at a resource the same as a resource assigned to the user apparatus for data reception in the connecting cell becomes an interference signal. Thus, in order to suppress the interference signal, resource assignment information to a user for the interference signal is necessary.

However, since CRS and CSI-RS are transmitted by the whole band irrespective of presence or absence of user assignment, user assignment information cannot be obtained from CRS or CSI-RS. Thus, user assignment information is separately necessary.

On the other hand, since DM-RS is transmitted only by a resource assigned to a user, the resource in itself by which DM-RS is received becomes user assignment information. Thus, user assignment information is not necessary separately.

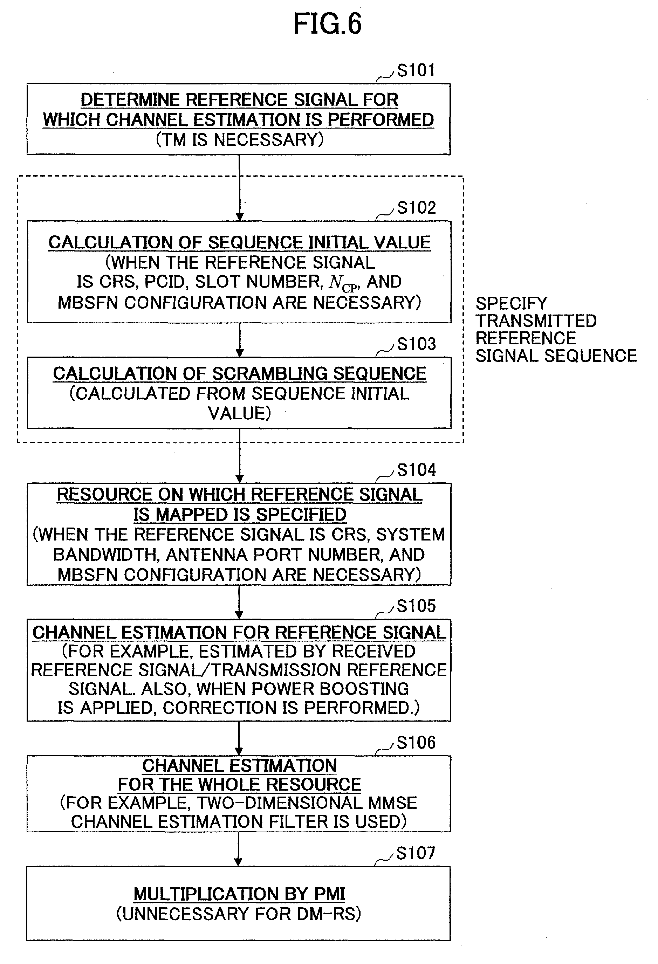

Necessary information for performing channel estimation using each reference signal is described in more detail while explaining an outline of the channel estimation processing for IRC weight calculation in the user apparatus with reference to a flowchart of Fig. 6. In the explanation, it is assumed that precoding transmission is performed in the base station side.

First, the user apparatus determines a reference signal on which channel estimation is performed (step 101). TM is necessary in this step. However, in a case where TM can be known by a certain method, or where the same TM is used in the whole system, it is not necessary to obtain TM.

In step 102, calculation of a sequence initial value for the transmitted reference signal is performed. When the reference signal is CRS, PCID (Physical Cell ID), slot number, N_{CP}, and MBSFN configuration and the like are necessary for calculating the sequence initial value. N_{CP} is a value indicating whether CP (Cyclic Prefix) length is Normal or Extended, and is 0 or 1. When the reference signal is CSI-RS, slot number, PCID or VCID (Virtual Cell ID), and N_{CP} and the like are necessary. VCID is defined in the non-patent document 1. Also, when the reference signal is DM-RS, slot number, PCID or VCID (Virtual Cell ID), and n_{SCID} and PDSCH transmission bandwidth and the like are necessary, wherein n_{SCID} is an identification number of a scramble sequence in MU-MIMO, and is 0 or 1.

In step 103, a scrambling sequence is calculated from the sequence initial value calculated in step 102. By steps 102 and 103, the reference signal sequence that is transmitted is specified.

In step 104, a resource on which the reference signal is mapped is specified. In this step, when the reference signal is CRS, system bandwidth, number of antenna ports, and MBSFN configuration and the like become necessary. When the reference signal is CSI-RS, system bandwidth and number of antenna ports and the like are necessary. When the reference signal is DM-RS, N_{CP} and number of antenna ports for each RB or for each subband are necessary.

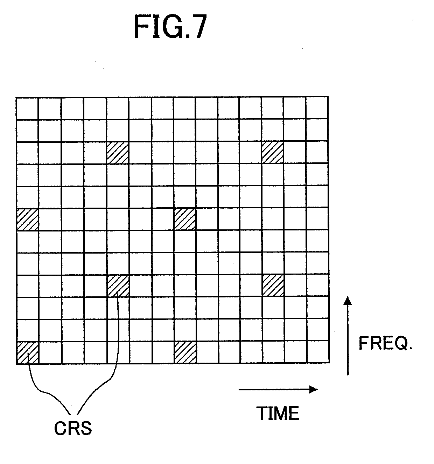

Mapping of the reference signal is defined according to the above-mentioned information such as the system bandwidth and the number antenna ports. Thus, the above-mentioned information is necessary. Fig. 7 shows a mapping example of CRS in the case of layer number 1.

Returning to Fig. 6, in step 105, channel estimation for the reference signal is performed. Here, for any of the reference signals, when power boosting is applied, it is necessary to correct it. Thus, power boosting information is necessary. The power boosting information is a power ratio between a reference signal and a data signal, for example.

In step 106, channel estimation for the whole resource is performed based on the estimation result obtained in step 105. In this step, for example, a two-dimensional MMSE channel estimation filter described in the non-patent document 2 is used.

In step 107, multiplication by the precoding matrix (represented as PMI) is performed. Therefore, in this step, in the cases of CRS and CSI-RS, PMI is necessary. In the case of DM-RS, by performing the processes until step 106, channel estimation including precoding information has been performed, thus, step 107, that is, PMI is unnecessary.

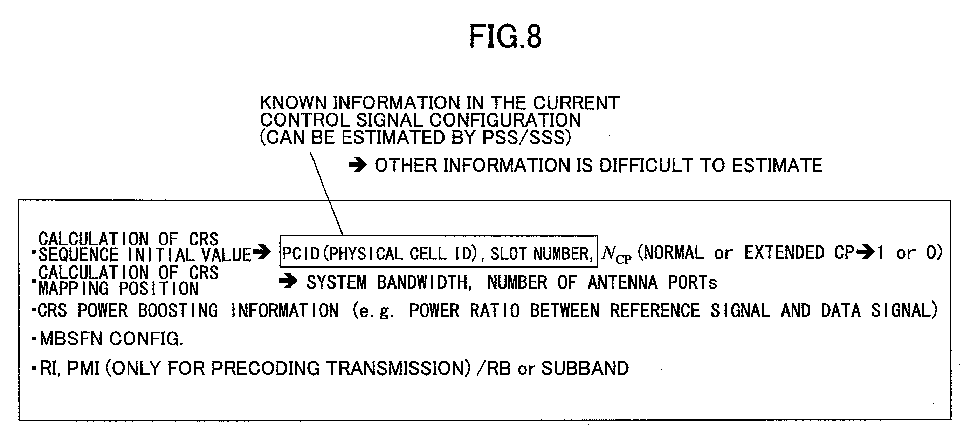

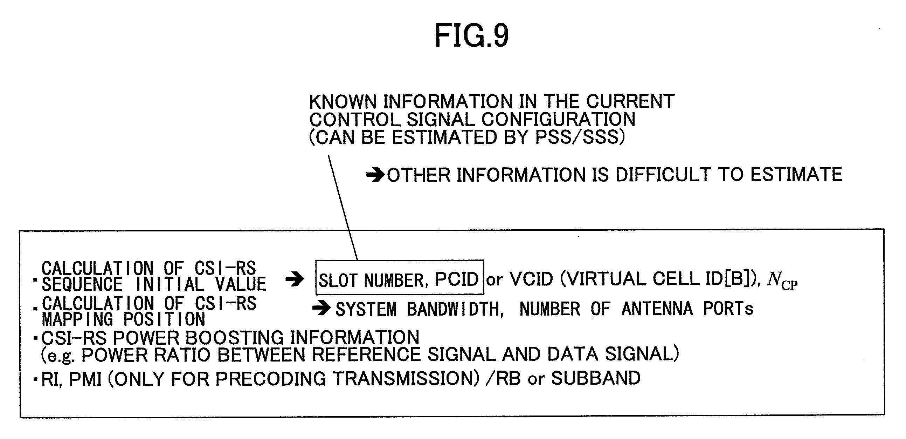

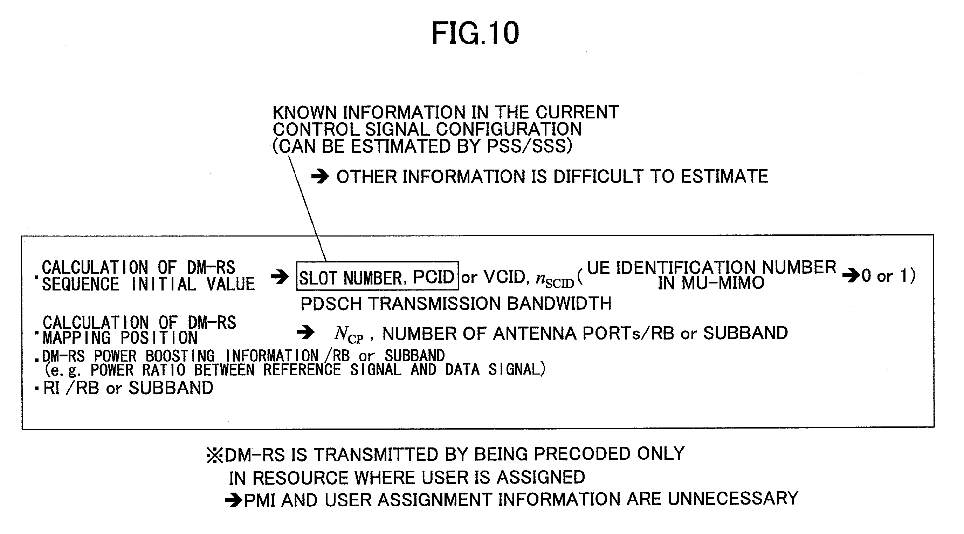

Figs. 8-10 show summaries of necessary information for performing channel estimation as mentioned above. Fig. 8 shows necessary information for performing channel estimation using CRS, Fig. 9 shows necessary information for performing channel estimation using CSI-RS, and Fig. 10 shows necessary information for performing channel estimation using DM-RS.

As shown in Figs. 8-10, in the pieces of necessary information for performing channel estimation using a reference signal, pieces of information other than PCID and slot number are difficult for the user apparatus to estimate.

### <SIC necessary information>

As mentioned above, in order to perform SIC, it is necessary to generate a replica signal for every interference signal. For achieving this, first, information for performing channel estimation for each interference signal is necessary. This information is the same as the IRC necessary information.

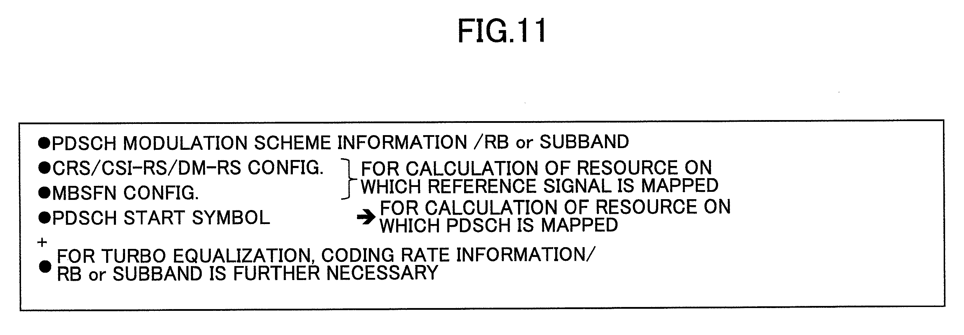

Next, for demodulation of the interference signal, information shown in Fig. 11 is necessary. That is, PDSCH modulation scheme information for each RB or for each subband, configuration information for each of CRS/CSI-RS/DM-RS, MBSFN configuration and PDSCH start symbol are necessary as information for demodulation of the interference signal. In the case of turbo equalization, coding rate information for each RB or each subband is also necessary.

In the above-mentioned pieces of information, configuration for each of CRS/CSI-RS/DM-RS and MBSFN configuration are necessary information for calculating a resource on which the reference signal is mapped, and PDSCH start symbol is necessary information for calculating a resource on which PDSCH is mapped.

### (Outline of embodiment)

As described before, in the present embodiment, it is presupposed that carrier aggregation (CA) is performed, and, in order to perform interference reduction processing in units of CC efficiently in an environment where CA is performed, the base station determines whether the user apparatus should perform interference reduction processing for each CC so as to notify the user apparatus of interference control information for a CC for which interference reduction processing should be performed.

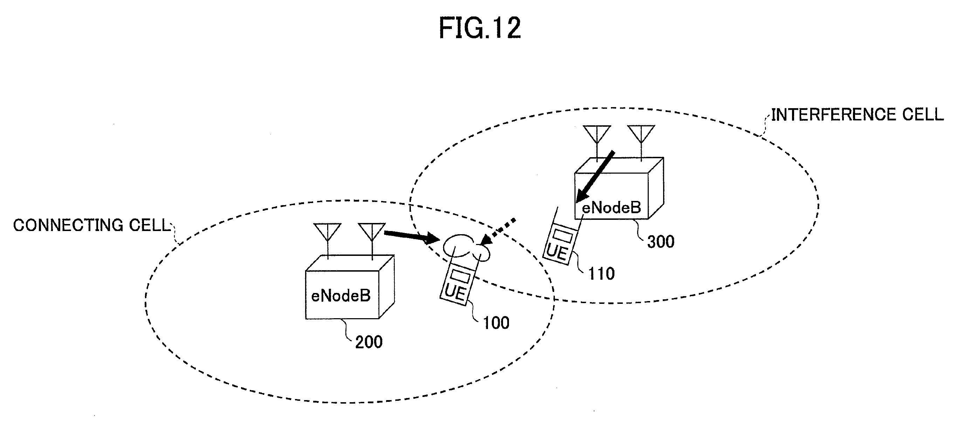

Fig. 12 shows a schematic block diagram of a radio communication system of the present embodiment. The system of the present embodiment is a radio communication system of the LTE-Advanced scheme, for example, in which a base station 200 (eNodeB) (connecting base station) forms a connecting cell (serving cell), and a user apparatus 100 (UE) in the cell performs communication with the connecting base station 200 by a desired signal (serving signal). The radio communication system of the present embodiment includes at least functions defined in the LTE-Advanced. But, the present invention is not limited to the scheme of the LTE-Advanced, and the present invention can be applied also to radio communication systems of the future generation of LTE-Advanced, and to schemes other than LTE.

Normally, the radio communication system is provided with many base stations. However, Fig. 12 only shows the connecting base station 200 and the base station 300 neighbor to the connecting base station 200. This neighboring base station 300 also forms a cell to perform signal transmission and reception with a user apparatus 110 for which the base station 300 is a connecting base station. A signal transmitted from the neighboring base station 300 to the user apparatus 110 for which the base station 300 is a connecting base station becomes an interference signal for the user apparatus 100. Therefore, in the present embodiment, the neighboring base station 300 is called an interference base station. Also, a cell of the interference base station 300 is called an interference cell. Although, in general, there are a plurality of interference base stations for a connecting base station, Fig. 12 shows only one interference base station.

In the present embodiment, it is assumed that carrier aggregation is applied, and each of the connecting cell and the interference cell corresponds to a component carrier (CC).

As described before, in an environment where carrier aggregation is performed, in order to perform interference reduction processing efficiently, the base station 200 determines whether the user apparatus 100 should perform interference reduction processing in units of CC so as to notify the user apparatus 100 of interference control information for a CC for which interference reduction processing should be performed. When notification of the interference control information is not performed, the user apparatus 100 may perform MMSE reception processing or IRC Type 2 reception processing or the like which does not require the interference control information. That is, when the user apparatus 100 is notified of the interference control information, the user apparatus 100 performs interference reduction processing using the interference control information, and when there is no notification of it, the user apparatus 100 performs reception processing that does not require interference control information.

In the following, a first example and a second example are described based on difference of a method for determining a CC for which interference reduction processing should be performed. In the first example, when there is a CC that becomes interference and the CC is synchronized with the connecting cell, it is determined to perform interference reduction processing for the CC. In the second example, when there is a CC that becomes interference and a transmission method (example TM: Transmission mode) of the CC is the same as a transmission method in the connecting cell, it is determined to perform interference reduction processing. In the following, description is given in more detail.

### (First example)

As described above, in the first example, when there is an interference cell for a connecting cell formed by a CC and these cells are synchronized with each other, the base station 200 determines to perform interference reduction processing for an interference signal from the interference cell in the connecting cell.

Although there is an interference cell for the connecting cell formed by a CC, if these cells are not synchronized, the base station 200 determines not to perform interference reduction processing of an interference signal from the interference cell in the connecting cell. Also, when there is no interference cell for the connecting cell formed by a CC, the base station 200 determines not to perform interference reduction processing.

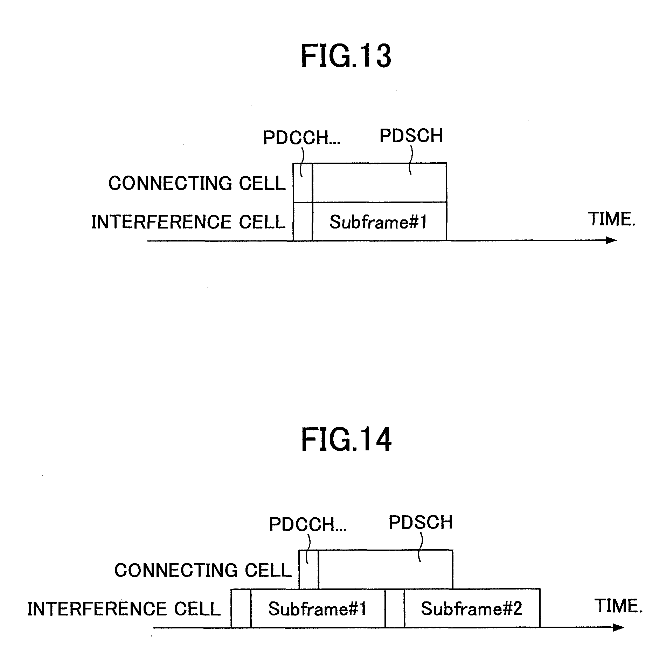

In the first example, the reason for performing the above-mentioned determination is as follows. When the connecting cell is synchronized with the interference cell, as shown in Fig. 13, timing of a signal that the user apparatus 100 receives from the connecting cell agrees with timing of a signal that the user apparatus 100 receives from the interference cell. Thus, for interference reduction for one subframe in the user apparatus 100, it is only necessary to transmit information of one subframe of the interference cell from the connecting base station 200 to the user apparatus 100. For example, only information of interference data signal (PDSCH) or EPDCCH is notified for demodulation of a data signal. Therefore, in this case, since interference reduction can be performed without increasing overhead so much, the connecting base station 200 determines to perform interference reduction processing so as to perform notification of interference control information.

On the other hand, when the connecting cell is not synchronized with the interference cell, as shown in Fig. 14, timing of a signal that the user apparatus 100 receives from the connecting cell does not agree with timing of a signal that the user apparatus 100 receives from the interference cell. Thus, for interference reduction of a data signal for one subframe in the user apparatus 100, it is necessary to notify information for two subframes of the interference cell. Also, as shown in Fig. 14, since a control signal from the interference cell becomes interference to the data signal in the connecting cell, information not only for a data signal (PDSCH) in the interference cell but also control signals ((PCFICH, PHICH, (E)PDCCH,··) become necessary. Thus, in this case, since overhead increases, the connecting base station 200 determines not to perform interference reduction processing so as not to perform notification of interference control information. However, in terms of improvement of performance of interference reduction processing, it may be determined to perform interference reduction processing irrespective of synchronized/not-synchronized even though overhead increases. An example in such an aspect is described later as a second example.

By the way, in the first example (same applies to the second example as to information on synchronization), information (identification information of synchronized base station(s) and the like) indicating which base station is synchronized with is held in a memory and the like in the base station, so that determination of synchronized/not-synchronized is performed by referring to the information. But, the method for determining which base station is synchronized with is not limited to this. Also, determination of synchronization may be performed for each cell formed by a component carrier. In this case, information (identification information of synchronized cell(s) and the like) indicating which cell of which base station is synchronized with a cell of the base station is held in a memory and the like in the base station, so that determination of synchronized/not-synchronized can be performed by referring to the information.

Also, the user apparatus 100 may determine synchronized/not-synchronized so as to notify the connecting base station 200 of the result. For example, the user apparatus 100 determines that the connecting cell is synchronized with the interference cell if a received timing difference between a synchronization signal (example :PSS/SSS) received by a desired CC from the base station 200 and a synchronization signal received from the interference base station (interference cell) is equal to or less than a predetermined threshold, then, transmits information indicating the result to the connecting base station 200. The connecting base station 200 can determine that the interference signal from the interference cell is a target of interference reduction processing.

When the received timing difference is greater than a predetermined threshold, it can be determined that the connecting cell is not synchronized with the interference cell.

As a threshold for determining synchronized/non-synchronized, for example, "30.16 µsec" which is utilized for determining synchronization between CCs of carrier aggregation can be used. Also, "30.26+X µsec" (X value is a predetermined value) which is utilized for determining inter-cell synchronization in Dual connectivity may be used.

Also, in the present embodiment (for both of first and second examples), it is assumed that the base station side ascertains whether interference reduction processing (IRC, SIC and the like) is executable in the user apparatus, and notifies an executable user apparatus of interference control information. Whether interference reduction processing is executable or not can be ascertained by information of capability and the like received from the user apparatus.

### <Concrete system configuration example in the first example>

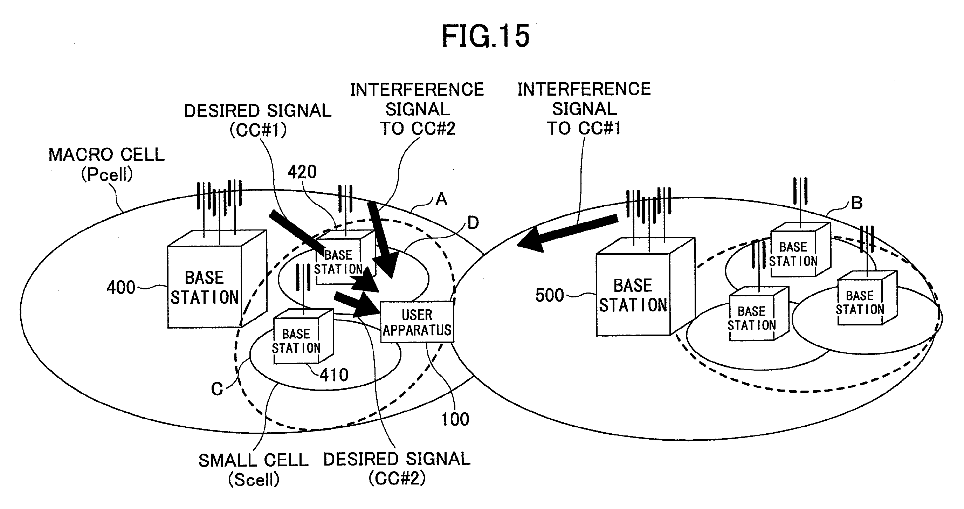

Fig. 15 shows a more concrete system configuration example. Here, as described in (Annex J (informative): Carrier Aggregation J.1 Deployment Scenarios) of the non-patent document 3, various scenarios are assumed in carrier aggregation. The system configuration example shown in Fig. 15 corresponds to the fourth scenario in the non-patent document 3. That is, it corresponds to a configuration in which a macro coverage is ensured by a frequency (low frequency basically), and traffic of hot spots is absorbed by using an RRE (Remote Radio Equipment) by a different frequency (high frequency basically). However, a scenario to which the present invention can be applied is not limited to this scenario, and the present invention can be applied to other scenarios.

In the configuration shown in Fig. 15, the base station 400 forms a macro cell (to be referred to as connecting cell A) which is a Pcell, and transmits a desired signal by CC#1 to the user apparatus 100. Also, the base station 500 forms a macro cell (to be referred to as interference cell B) that becomes interference for the user apparatus 100, and transmits an interference signal by the CC#1. Further, the base station 410 forms a small cell (to be referred to as connecting cell C) which is an Scell for the user apparatus 100, and transmits a desired signal by CC#2. Also, the base station 420 forms a small cell (to be referred to as interference cell D) that becomes interference to the user apparatus 100, and transmits a desired signal by the CC#2.

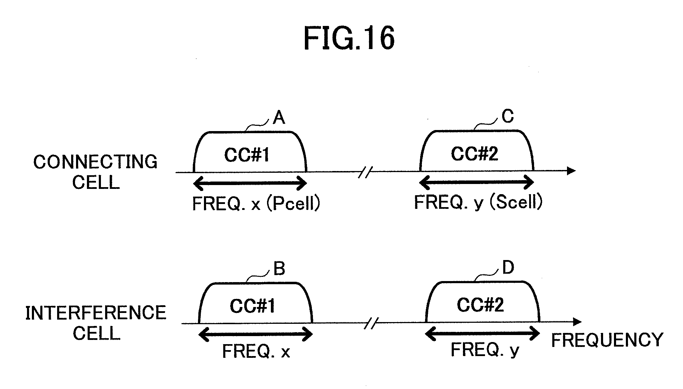

Fig. 16 shows a state of carriers in the connecting cell and the interference cell. As shown in Fig. 16, the connecting cell A (macro cell) and the interference cell B (macro cell) use the CC#1 which is a CC of the same frequency, and the connecting cell C (small cell) and the interference cell D (small cell) use the CC#2 which is a CC of the same frequency

In the example shown in Fig. 15, it is assumed that macro cells are not synchronized, and that small cells within the dotted line are synchronized. That is, the connecting cell A is not synchronized with the interference cell B, and the connecting cell C is synchronized with the interference cell D.

In such an assumption, the base station 400 that provides the macro cell detects that there is interference between macro cells. But, since the macro cells are not synchronized with each other, the base station 400 determines not to cause the user apparatus 100 to perform interference reduction processing for the CC#1, and does not transmit interference control information.

On the other hand, the base station 400 or the base station 410 detects that there is interference between small cells, and, in addition to that, the small cells are synchronized. Thus, the base station 400 or the base station 410 determines to cause the user apparatus 100 to perform interference reduction processing for the CC#2, and transmits interference control information.

### <Notification method example of interference control information>

In the following, an example of a notification method of interference control information to the user apparatus 100 from the base station 400 and the like is described. The notification method described here is common to the first example and the second example. In the first example and the second example, content of interference control information to be notified is not limited to information described below. As long as it is information used for interference reduction processing in the user apparatus 100, information other than information described below, information added to information described below and the like may be notified.

Notification of interference control information from the base station 400 and the like to the user apparatus may be performed dynamically using a PDCCH, or may be performed semi-statically by using an RRC signaling, or may be performed by combining these. Also, notification of interference control information may be performed by using a channel other than these. The user apparatus 100 determines for which CC to perform interference reduction processing based on the received interference control information, and executes interference reduction processing for the CC. The interference control information may include identification information of a CC which is a target of execution of interference reduction processing.

Since an RRC connection is established between the user apparatus 100 and the base station basically only in the Pcell, when performing notification of interference control information by an RRC signaling to the user apparatus 10, the base station 400 performs the notification in the example of Fig. 15. However, an RRC connection may be established in an Scell, and in such a case, interference control information may be notified by an RRC signaling from an Scell (that is, base station 410).

Although there is not specific limitation as to whether to perform dynamic notification or semi-static notification, in the present embodiment, for example, from among pieces of information used for performing interference reduction for an interference signal in the user apparatus 100, pieces of information that dynamically change are notified by a DCI of a PDCCH which is a downlink physical layer signaling channel, and other pieces of information are notified semi-statically by using an RRC signaling. However, this is merely an example. By the way, dynamically changing information is, for example, information that may change for each subframe.

Here, PDCCH and DCI are described. PDCCH is a channel for transmission, to a user apparatus, control information (DCI) such as determination of scheduling of uplink/downlink and power control command and the like. Then, as pieces of information included in DCI, there are information on a PDSCH, information on a PUSCH, power control information and the like. In these pieces of information, as information on the PDSCH, there are, for example, resource block assignment information, modulation and coding rate information, precoding information, HARQ information, information on spatial multiplexing (when performing spatial multiplexing) and the like.

For DCI, several formats are prepared depending on transmission mode (TM: Transmission Mode) and the usage. Especially, in the present embodiment, as described later, when using DCI format 2 series (2, 2A-2D), a part of interference control information that is information of an interference cell necessary for interference reduction processing is reported to the user apparatus 100 by performing replacement/read-substitution of DCI.

The interference control information is, in the case of IRC, information described with reference to Figs. 8-10, and the like, that is, information necessary for channel estimation of the interference signal and user assignment information of the interference signal. Also, for SIC (same applies to MLD), in addition to the before-mentioned information required for IRC, information for demodulating an interference signal is necessary as shown in Fig. 11.

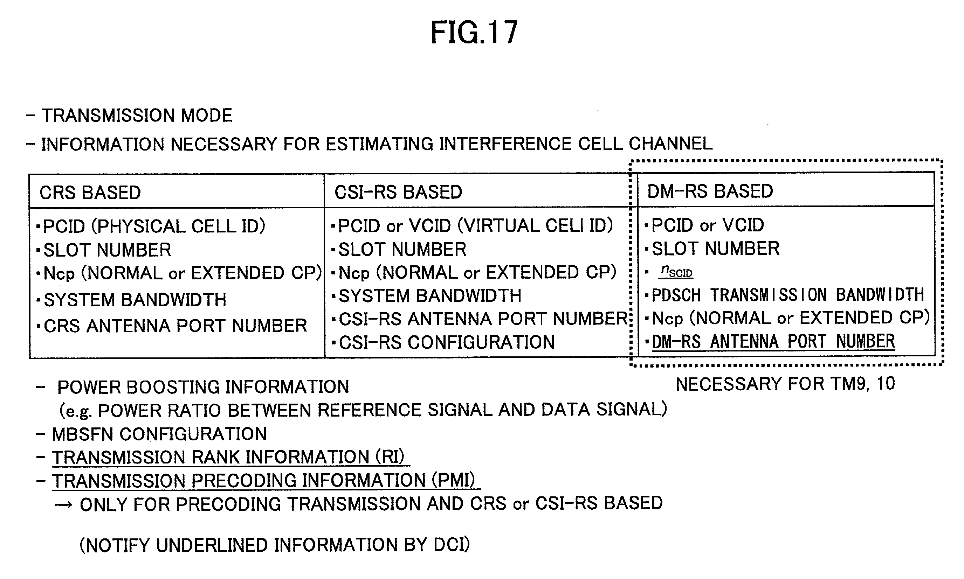

Fig. 17 is a diagram showing an example of information to be notified by DCI and information to be notified by RRC in IRC necessary information. Underlined information indicates information notified by DCI. Information which is not underlined is notified by RRC signaling.

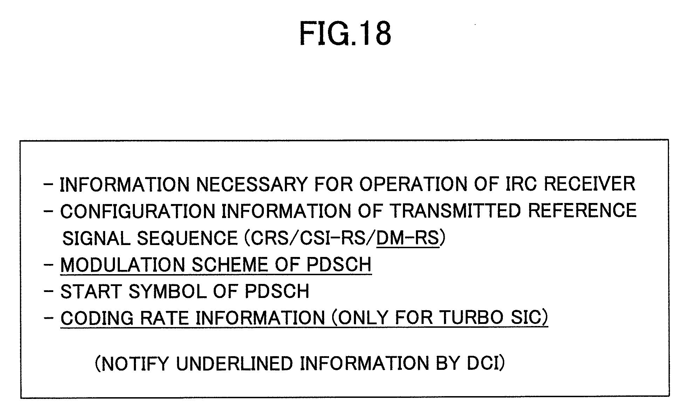

Fig. 18 is a diagram showing an example of information to be notified by DCI and information to be notified by RRC in SIC necessary information. Underlined information indicates information notified by DCI. Information which is not underlined is notified by RRC signaling. Fig. 17 and Fig. 18 are merely examples, and not limited to these.

By the way, in channel estimation of an interference signal in interference reduction processing, all pieces of information shown in Figs. 8-10 and the like are not essential. Also, as described later, information elimination can be performed.

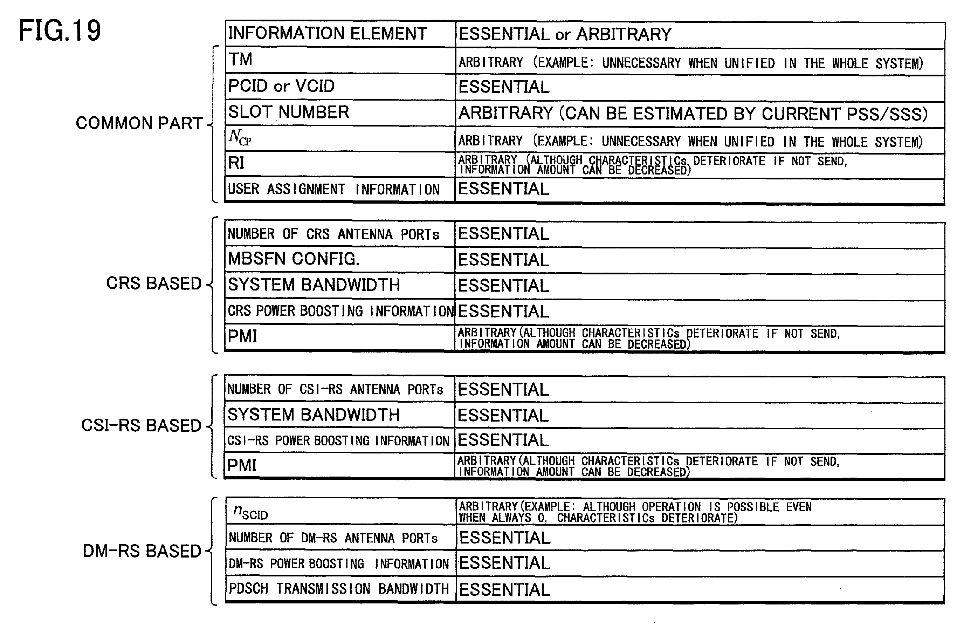

Fig. 19 shows information for which notification is essential for channel estimation of an interference signal in interference reduction processing, and information for which notification is not essential (arbitrary). Fig. 19 shows information by separating it into a part common to each reference signal and a part specific for each reference signal.

As shown in Fig. 19, in any reference signal, PCID or VCID and user assignment information are essential. In channel estimation using CRS, number of CRS antenna ports, MBSFN configuration, system bandwidth, CRS power boosting information are essential. In channel estimation using CSI-RS, number of CSI-RS antenna ports, system bandwidth, CSI-RS power boosting information are essential. In channel estimation using DM-RS, number of DM-RS antenna ports, DM-RS power boosting information, PDSCH transmission bandwidth are essential.

In information shown in Fig. 19, pieces of information other than those described above can be arbitrarily used. Even though these pieces of information are not included, interference reduction processing can be executed. However, for improving characteristics, it is desirable to include even information of "arbitrary".

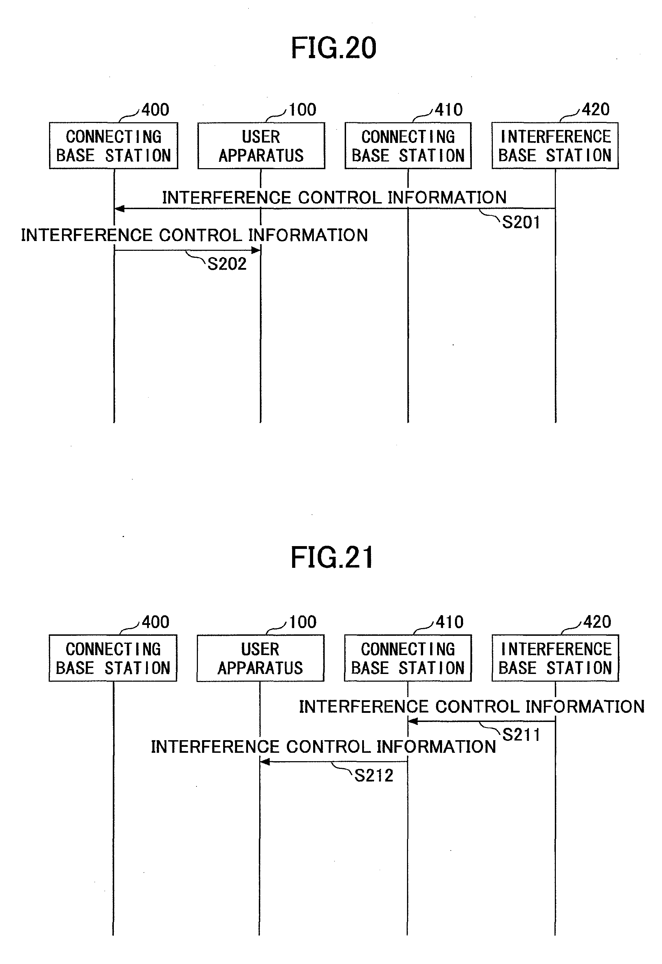

In the following, an example of a method for notifying interference control information is described in more detail. Fig. 20 is a diagram showing an example 1 when notifying interference control information in a situation shown in Fig. 15. In the example shown in Fig. 20, the connecting base station 400 (base station that forms a Pcell) receives interference control information from the interference base station 420 (step 201), and transmits the interference control information to the user apparatus 100 (step 202). Step 202 can be performed by a PDCCH or a RRC signaling or by both of them. However, in a case where a PDCCH is used in step 202, for example, a CIF is set for indicating that it is control information for an Scell.

Fig. 21 is a diagram showing an example 2 when notifying interference control information in a situation shown in Fig. 15. In the example shown in Fig. 21, the connecting base station 410 (base station that forms an Scell) receives interference control information from the interference base station 420 (step 211), and transmits the interference control information to the user apparatus 100 (step 212). Step 212 can be performed by a PDCCH or a RRC signaling or by both of them. However, the RRC signaling is available when an RRC connection is established between the connecting base station 410 and the user apparatus 100. Notification of interference control information can be performed by combining the methods of Fig. 20 and Fig. 21.

In the following, various notification methods are described using concrete examples. In the following, although description is provided by taking the connecting base station 410 as an example, the connecting base station 400 can perform notification similarly.

### (1) Concrete example 1

The concrete example 1 shows an example in which the connecting base station 410 notifies the user apparatus 100 of IRC necessary information by a PDCCH. That is, the connecting base station 410 describes IRC necessary information in a format of DCI (Downlink Control Information), and sends the DCI to the user apparatus 100 by the PDCCH.

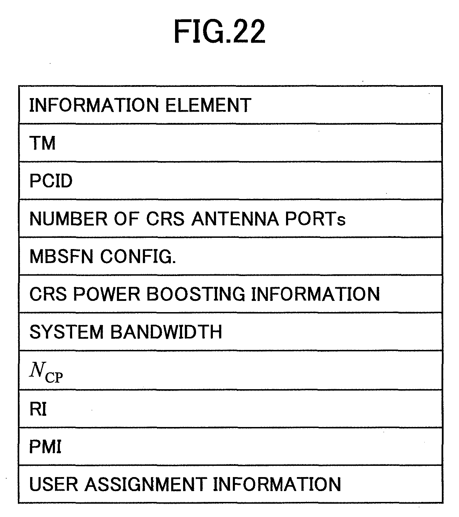

In this case, as shown in Fig. 22, for example, DCI in which IRC necessary information is described is sent from the connecting base station 410 to the user apparatus 100. Also, for example, in a case where there are two interference cells so that the connecting base station 410 notifies the user apparatus 100 of two pieces of the IRC necessary information, pieces of information for the two interference cells may be described in the DCI format shown in Fig. 22 for each information element, or, IRC necessary information for one interference cell is described in the DCI shown in Fig. 22, and DCI of the same format as the DCI shown in Fig. 22 may be added, next to the last information (user assignment information), as IRC necessary information of the second interference cell.

Figs. 22 show the case of CRS. Also as to CSI-RS and DM-RS, the IRC necessary information can be sent in the same way as CRS except for change of the content of information.

In the concrete example 1, instead of sending by the PDCCH all pieces of information necessary for executing IRC by describing the information in DCI, a part of pieces of information necessary for executing IRC may be sent by the PDCCH by describing the part of the information in DCI. The reason is that, as to predetermined information in the IRC necessary information described in Figs. 8 - 10, IRC can be performed without sending the predetermined information.

Although, in the above-mentioned examples, although a case is shown in which IRC necessary information is notified as interference control information, a similar notification method can be applied also to SIC. As described before, in SIC, it is necessary to generate replica signals for all interference signals. For the purpose, first, information for performing channel estimation for each interference signal is necessary. This is the same as IRC necessary information. In addition to that, as shown in Fig. 11, information for demodulation of interference signals is necessary. In a case where all of pieces of interference control information cannot be transmitted only by DCI for performing SIC, for example, remaining pieces of information may be transmitted by the RRC signaling. In a case where all of pieces of interference control information cannot be transmitted only by DCI for performing IRC, for example, remaining pieces of information may be transmitted by the RRC signaling. Also, replacement, obtaining (estimation) by the user apparatus 100, reduction of the number of bits and the like as described below may be also used.

### (2) Concrete example 2

In the concrete example 2, the connecting base station 410 replaces a part or all of pieces of downlink control information described in DCI with interference control information, and sends the DCI in which information is replaced to the user apparatus 100 by the PDCCH. Then, the user apparatus 100 extracts the replaced pieces of information from information in the DCI as interference control information, and uses the information for interference reduction processing. That is, the user apparatus 100 reads and uses downlink control information at the replacing target position in the DCI as interference control information.

The replacement is performed by using free bits in a plurality of bits corresponding to the original downlink control information, for example. Also, in DCI, downlink control information that causes no trouble even if this is not sent may be replaced with interference control information. The downlink control information that causes no trouble even if this is not sent is, for example, downlink control information that has been sent to the user apparatus 100 by a control signal other than the DCI, downlink control information of which transmission frequency may be low, and the like. As to the downlink control information of which transmission frequency may be low, the downlink control information is replaced with interference control information every predetermined number of subframes, for example.

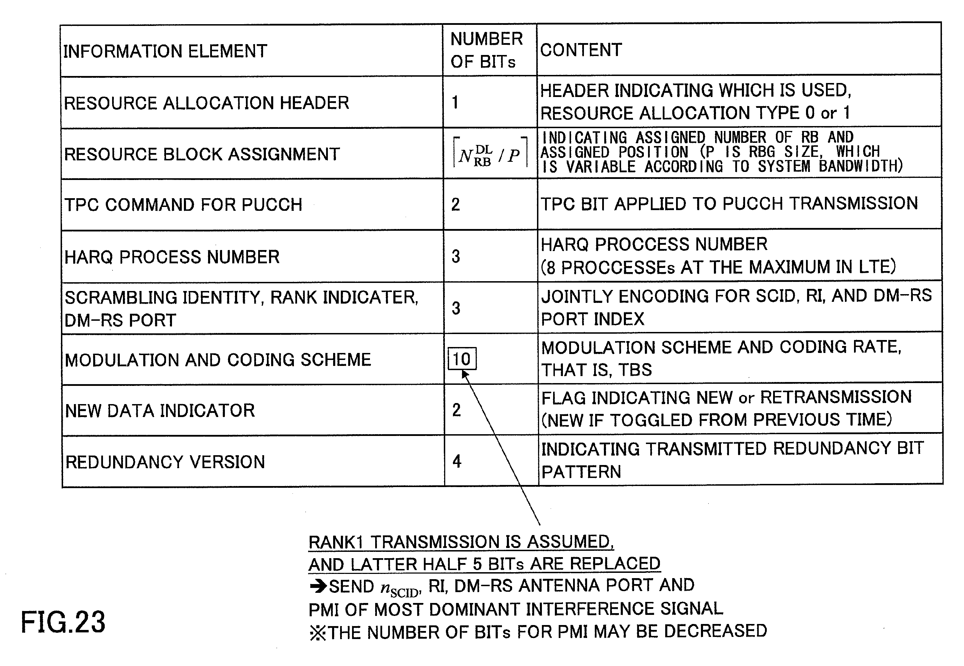

An example of replacement in the concrete example 2 is described with reference to Fig. 23. Fig. 23 shows DCI format 2C for TM9. In this example, RANK1 transmission is assumed so that 5 bits of the latter half of 10 bits corresponding to an information element of the modulation scheme and the coding rate are replaced with interference control information (IRC necessary information in this example). In the 10 bits corresponding to the information element of the modulation scheme and the coding rate, information of the first stream is described in 5 bits of the first half, and information of the second stream is described in 5 bits of the latter half. But, since the RANK1 transmission uses only 1 stream, the 5 bits of the latter half are not used. Thus, in this example, IRC necessary information is described in the 5 bits of the latter half. In this example, pieces of the IRC necessary information in this case are n_{SCID}, RI, DM-RS antenna port and PMI of the most dominant interference signal. As to PMI, the number of bits may be decreased. An example for decreasing the number of bits of PMI is described later.

Generally, IRC is effective when the user apparatus 100 is positioned at a cell edge where interference from an interference cell is large. In such a case, it is assumed that the number of transmission layer (RANK) is controlled to be 1 by rank adaptation. Thus, as mentioned above, RANK1 transmission is assumed.

The replacement shown in Fig. 23 is not limited to DCI format 2C, but can be applied to the whole DCI format 2 series.

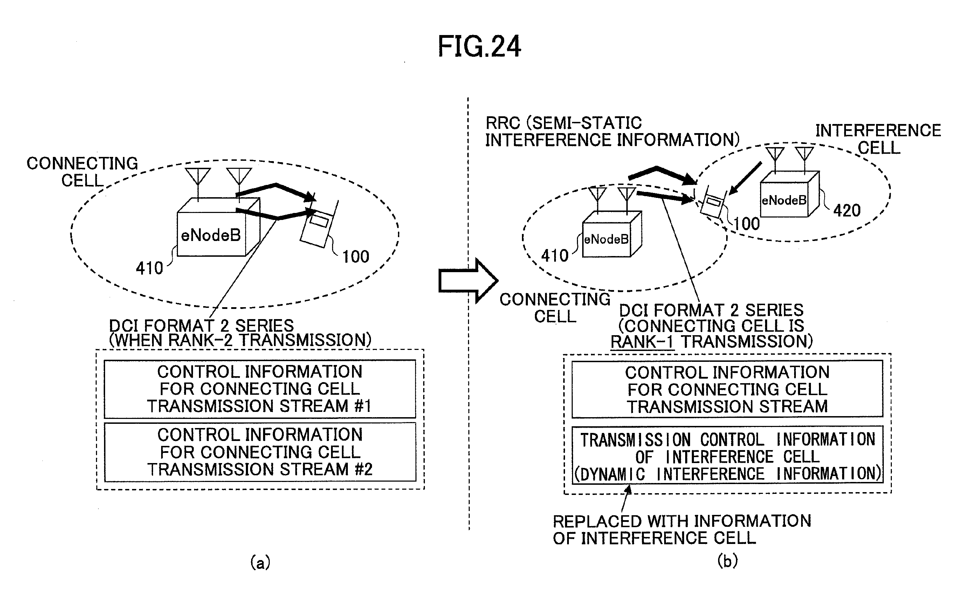

That is, as shown in Fig. 24(a), in a case where the connecting base station 410 performs rank 2 transmission for transmitting two streams to the user apparatus 100, control information for each stream is described in the regions of 2 TBs in the DCI format 2 series, and the user apparatus 100 performs demodulation and decoding for each piece of stream data by using these pieces of control information. On the other hand, as shown in Fig. 24(b), for example, in a case where, when the user apparatus 100 is at a cell edge and the like, the connecting base station 410 performs rank 1 transmission for transmitting one stream to the user apparatus 100, one region of regions of 2TBs in the DCI format 2 series is used as control information for connecting cell transmission stream, but, another region is not used as control information for connecting cell transmission stream. Thus, the region is used for notification of transmission control information of an interference cell, that is, for notification of interference control information. Other information is notified by RRC signaling.

By the way, in the above-mentioned example, although a case for notifying of IRC necessary information is shown, a similar notification method can be applied also to SIC.

### (3) Concrete example 3

It is possible that the connecting base station 410 transmits a part of pieces of interference control information to the user apparatus 100, and the user apparatus 100 can estimate other pieces of information (lacking information).

For example, the user apparatus 100 estimates PMI by using ZP (Zero Power) CSI-RS in the connecting cell.

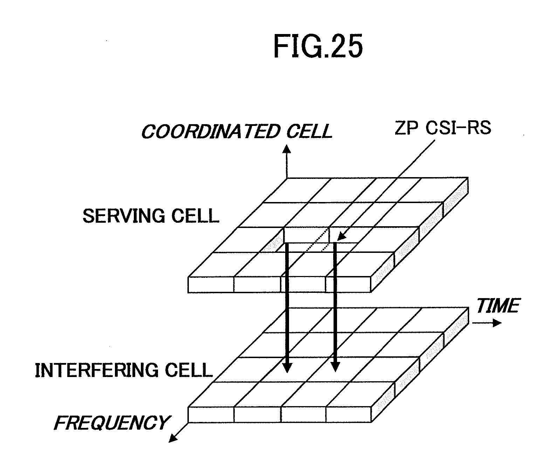

As shown in Fig. 25, ZP CSI-RS is a signal in which a signal of the connecting cell is muted (power is 0) for interference power measurement. The location of the ZP resource that overlaps with PDSCH of the interference signal is reported to the user apparatus 100 by upper layer signaling (example: RRC signaling), so that the user apparatus 100 can perform interference power measurement at the ZP CSI-RS of the resource. Since the ZP CSI-RS is equivalent to the CSI-RS configuration, the periodicity is 5 - 80 msec. Also, the periodicity is reported to the user apparatus 100 by upper layer signaling (example: system information).

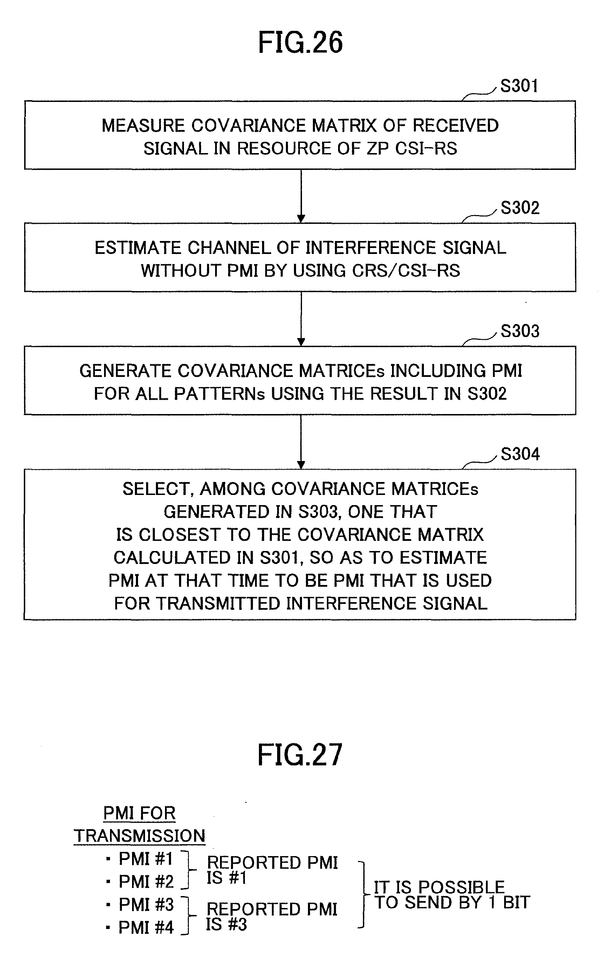

In the concrete example 3, processing for PMI estimation executed by the user apparatus 100 is described with reference to the flowchart of Fig. 26.

In step 301, the user apparatus 100 obtains a covariance matrix of a received signal that is received at the resource of ZP CSI-RS. Accordingly, the user apparatus 100 can obtain the covariance matrix including precoding information of the interference signal.

In step 302, the user apparatus 100 estimates a channel of the interference signal at the resource without precoding information by using CRS or CSI-RS.

In step 303, the user apparatus 100 generates (calculates) covariance matrices of the interference signal for all patterns of PMI using the channel information estimated in step 302 and precoding matrices corresponding to all patterns of PMI. That is, for example, when there are 4 types of PMI, four covariance matrices are generated.

In step 304, the user apparatus 100 selects, among all of the covariance matrices generated in step 303, one that is closest to the covariance matrix calculated in step 301, so as to estimate the precoding matrix (PMI) that is used for the closest covariance matrix to be a precoding matrix corresponding to the interference signal that is transmitted.

### (4) Concrete example 4

As to PMI in interference control information, the connecting base station 410 may decrease the granularity of PMI and send the PMI to the user apparatus 100. For example, as to a case where two antenna transmission is performed in downlink, 4 types of PMIs are defined in RANK1. Thus, 2 bits are necessary for transmitting the PMI as it is. But, as shown in Fig. 27, as to PMIs corresponding to precoding matrices to be used for actual signal transmission, two types of close PMIs can be aggregated into one so that the whole number of types becomes two. Accordingly, the number of bits of PMI to be transmitted to the user apparatus 100 can be decreased from two to one. Although this case is an example when the transmission antenna number is two, the decrease of granularity may be applied to any number of transmission antennas. For example, when the number of transmission antennas is four, the number of types of PMI becomes 16, which requires 4 bits. In this case, the number of types can be decreased to 4 (2bits) by decreasing granularity. In this case, compared to a case where decrease of granularity is not performed, characteristics may be deteriorated to some extent, but, the amount of information to be sent can be decreased.

### (Second example)

Next, a second example is described. In the second example, when there is an interference cell (interference CC) against a connecting cell formed by a CC and transmission methods are the same between these cells (CCs), the base station 200 determines to perform interference reduction processing of an interference signal from the interference cell in the connecting cell.

Although there is an interference cell against a connecting cell formed by a CC, if transmission methods are not the same between these cells, the base station 200 determines not to perform interference reduction processing of an interference signal from the interference cell in the connecting cell. Also, when there is not an interference cell for the connecting cell formed by a CC, the base station 200 determines not to perform interference reduction processing. The determination method of synchronized/not-synchronized is the same as that in the first example. The "transmission method" can be determined, for example, by control information received from an interference base station that forms an interference cell.

An example of the above-mentioned "transmission method" is TM. For example, TM of a connecting cell (connecting CC) is TM9, an interference signal from an interference cell that uses TM9 can be determined as a target for performing interference reduction processing.

Also, as the "transmission method", an individual transmission method (to be referred to as individual transmission method) such as "closed loop type transmission diversity (SFBC)" may be used. As to the individual transmission method, for example, TM2 uses SFBC, and also, SFBC is used in a case where TM is TM 3 and rank is rank 1. Thus, when TM of the connecting cell (connecting CC) is TM2, an interference signal from an interference cell of TM2 or TM3 and Rank-1 can be determined to be a target for performing interference reduction processing.

Also, as the "transmission method", a reference signal used for demodulation of data may be used. For example, when the reference signal used in the connecting cell is "DM-RS", an interference signal from an interference cell in which "DM-RS" is used for data demodulation can be determined to be a target for performing interference reduction processing. In the following, as an example, a case where "transmission method" is TM is mainly described.

In the example in which the above-mentioned TM is used, the reason that interference reduction processing is performed when TM is the same between the connecting cell and the interference cell, and interference reduction processing is not performed when TM is different is as follows.

In order to reduce signaling overhead, it is desirable that the user apparatus 100 side can blindly estimate information (interference control information) used for interference reduction processing to some extent (example: concrete example 3). However, in a case where TM is different between the interference signal and the desired signal, there is a possibility in that accuracy of blind estimation is bad.

That is, accuracy of blind estimation of interference control information is largely affected by channel estimation accuracy of an interference signal. However, generally, the channel estimation accuracy of an interference signal is bad when received power of the interference signal is small compared with the desired signal. However, for example, if TM of both of the desired signal and the interference signal is TM9, since resources of DM-RS for performing channel estimation are the same, it is possible to improve estimation accuracy by performing channel estimation for the interference signal after subtracting a DM-RS replica of the desired signal from the received signal (DM-RS canceller).

On the other hand, for example, when the desired signal is TM4 (CRS-based) and the interference signal is TM9 (DMRS-based), since resources of a reference signal for performing channel estimation are not the same, it becomes difficult to improve channel estimation accuracy by the above-mentioned canceller, so that it is not possible to improve blind estimation accuracy.

If blind estimation is not correct (for example, erroneous determination of PMI of the interference signal), estimation accuracy of interference replica of interference reduction processing deteriorates, so that there is a possibility in that characteristics of interference reduction processing deteriorate compared with a conventional receiver. Therefore, in a case where TMs are different, reduction of overhead and suppression of deterioration of system performance are available by not performing interference reduction processing.

### <Concrete system configuration example in the second example>

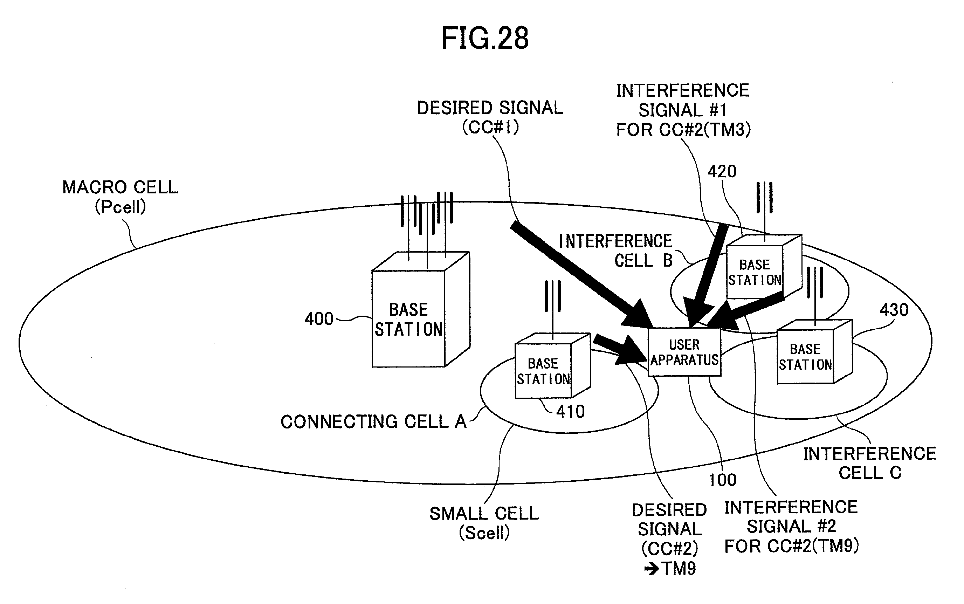

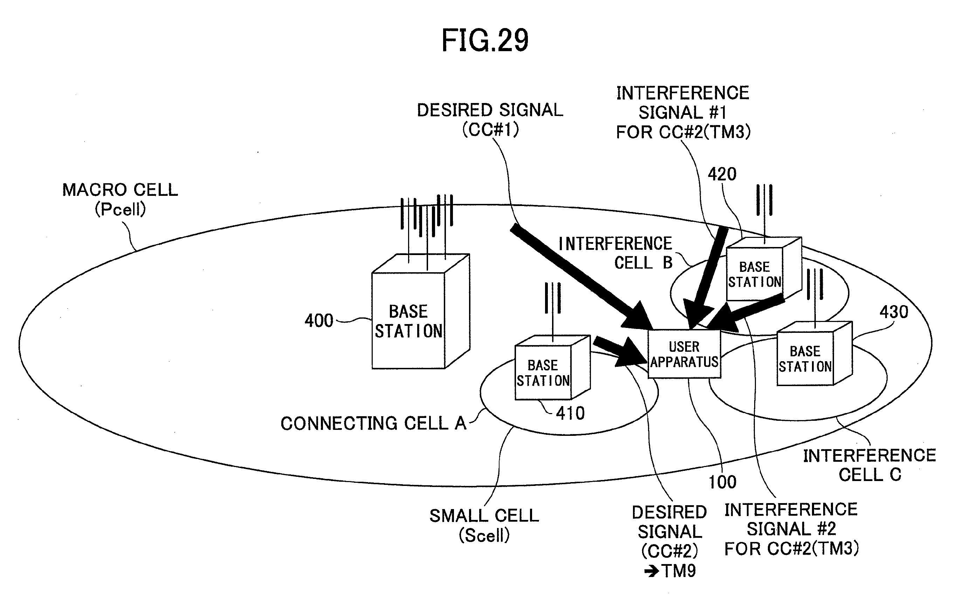

Fig. 28 and Fig. 29 show a more concrete system configuration example in the second example. Also in the second example, carrier aggregation of a scenario similar to that of the first example is assumed.

In the configuration shown in Fig. 28, the base station 400 forms a macro cell which is a Pcell, and transmits a desired signal by CC#1 to the user apparatus 100. Also, the base station 410 forms a small cell (to be referred to as connecting cell A) which is an Scell for the user apparatus 100, and transmits a desired signal by CC#2. Also, the base station 420 forms a small cell (to be referred to as interference cell B) that becomes interference to the user apparatus 100, and transmits an interference signal #1 by the CC#2. Also, the base station 430 forms a small cell (to be referred to as interference cell C) that becomes interference to the user apparatus 100, and transmits an interference signal #2 by the CC#2. Except for difference of TM, Fig. 29 shows a similar configuration.

In the situation shown in Fig. 28, a desired signal is transmitted by TM9 in the connecting cell A, an interference signal is transmitted by TM3 in the interference cell B, and an interference signal is transmitted by TM9 in the interference cell C. For example, the base station 400 ascertains these pieces of information by collecting them so as to determine the interference signal of the interference cell C in which TM9 that is the same as the connecting cell A is used to be a target of interference reduction processing and to notify the user apparatus 100 of interference control information on the interference signal.

On the other hand, in the situation of Fig. 29, a desired signal is transmitted by TM9 in the connecting cell A, an interference signal is transmitted by TM3 in the interference cell B, and an interference signal is transmitted by TM3 in the interference cell C. For example, the base station 400 ascertains these pieces of information by collecting them. Since there no interference cell in which TM9 that is the same as the connecting cell A is used, the base station 400 does not transmit interference control information, or explicitly transmits, to the user apparatus 100, OFF notification for instructing not to perform interference reduction processing.

By the way, although the first example and the second example have been described separately so far, the first example and the second example may be combined. In that case, for example, when there is a CC that becomes interference, and the CC is synchronized with the connecting cell, and the transmission method (example: TM: Transmission mode) of the CC is the same as the transmission method in the connecting cell, the base station determines to perform interference reduction processing. Also, when the condition of "there is a CC that becomes interference, and the CC is synchronized with the connecting cell, and the transmission method (example: TM: Transmission mode) of the CC is the same as the transmission method in the connecting cell" is not satisfied, the base station determines not to perform interference reduction processing.

In each of the first example, the second example and the example of the combination of these, when the base station determines not to apply interference reduction processing in a case where there is no interference signal for applying interference reduction processing, or the like, the base station may transmit OFF notification of interference reduction processing to the user apparatus 100. The user apparatus 100 that receives the OFF notification performs reception processing, that does not require interference control information, such as, for example, MMSE reception processing, or IRC Type 2 or the like. However, in a case where interference control information is newly notified, interference reduction processing may be applied by using it.

Also, the determinations whether to perform interference reduction processing or not described in the first example and the second example are merely examples. Determination whether to perform interference reduction processing or not may be performed by using a condition other than synchronization and transmission methods.

### (System configuration, process flow)

In the following, detailed configurations of the system and process sequences in the present embodiment are described.

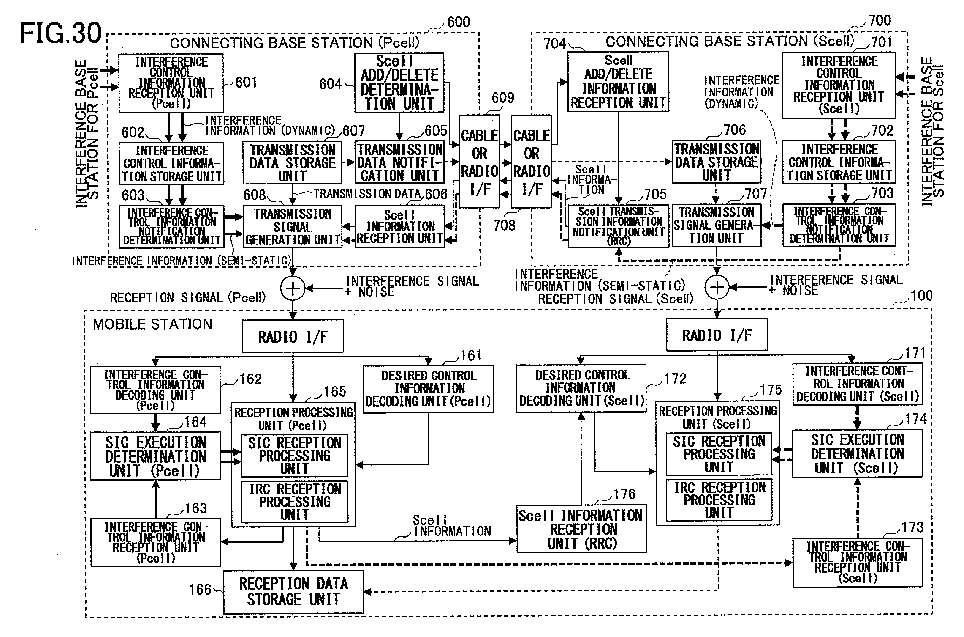

Fig. 30 shows a functional block diagram showing a functional configuration of a communication system in the present embodiment. The communication system shown in Fig. 30 is an example in a case where the user apparatus 100 establishes an RRC connection only with a Pcell, and the communication system includes a connecting base station 600 that forms a Pcell, and a connecting base station 700 that forms an Scell, and a user apparatus 100.

As shown in Fig. 30, the connecting base station 600 includes an interference control information reception unit (Pcell) 601, an interference control information storage unit 602, an interference control information notification determination unit 603, an Scell add/delete determination unit 604, a transmission data notification unit 605, an Scell information reception unit 606, a transmission data storage unit 607, a transmission signal generation unit 608 and an I/F 609.

The interference control information reception unit (Pcell) 601 receives interference control information that is control information of an interference signal for the Pcell from an interference base station. The interference control information storage unit 602 is a memory for storing interference control information. The interference control information notification determination unit 603 determines whether to notify interference control information. That is, as described before, when the interference cell is synchronized with the connecting cell, or when the transmission method is the same between the interference cell and the connecting cell, it is determined to perform the notification.

The Scell add/delete determination unit 604 determines addition/deletion of an Scell based on reception quality information (Measurement report) fed back from the user apparatus 100. Only when an Scell is added, the transmission data notification unit 605 notifies the Scell (connecting base station 700) of the transmission data.

The Scell information reception unit 606 receives control information (RRC) of an Scell and control information (information to be notified by RRC) of an interference signal for the Scell from the Scell. The Scell information reception unit 606 may receive, from the Scell, information that is control information of an interference signal for the Scell and that is notified by DCI (dynamically).

The transmission data storage unit 607 is a memory for storing a transmission data signal. The transmission signal generation unit 608 generates a desired transmission signal including desired control information, interference control information (RRC, dynamic), control information (RRC) of an Scell, a transmission data signal and the like.

The connecting base station 700 that forms the Scell includes an interference control information reception unit (Scell) 701, an interference control information storage unit 702, an interference control information notification determination unit 703, an Scell add/delete information reception unit 704, an Scell transmission information notification unit (RRC) 705, a transmission data storage unit 706, a transmission signal generation unit 707 and an I/F 708.

The interference control information reception unit (Scell) 701 receives interference control information that is control information of an interference signal for the Scell from an interference base station. The interference control information storage unit 702 is a memory for storing interference control information. The interference control information notification determination unit 703 determines whether to notify interference control information. That is, as described before, when the interference cell is synchronized with the connecting cell, or when the transmission method is the same between the interference cell and the connecting cell, it is determined to perform the notification.

The Scell add/delete information reception unit 704 receives addition/deletion information of an Scell transmitted from the Pcell.

The Scell transmission information notification unit (RRC) 705 notifies the Pcell of control information (RRC) of an Scell and control information (RRC) of an interference signal for the Scell. The Scell transmission information notification unit (RRC) 705 may notify the Pcell of control information, of an interference signal for the Scell, that should be notified by DCI.

The transmission data storage unit 706 is a memory for storing transmission data. The transmission signal generation unit 707 generates a desired transmission signal including desired control information, interference control information (RRC, dynamic), a transmission data signal and the like.

As shown in Fig. 30, the user apparatus 100 includes desired control information decoding units (Pcell/Scell) 161, 171, interference control information decoding units (Pcell/Scell) 162, 172, interference control information reception units (Pcell/Scell) 163, 173, interference reduction execution determination units (Pcell/Scell) 164, 174, reception processing units (Pcell/Scell) 165, 175, a reception data storage unit 166 and an Scell information reception unit (RRC) 176.

The desired control information decoding units (Pcell/Scell) 161, 171 decode DCI of a desired signal transmitted from Pcell/Scell. The interference control information decoding units (Pcell/Scell) 162, 172 decode transmission control information (Dynamic) of an interference cell transmitted from Pcell/Scell.

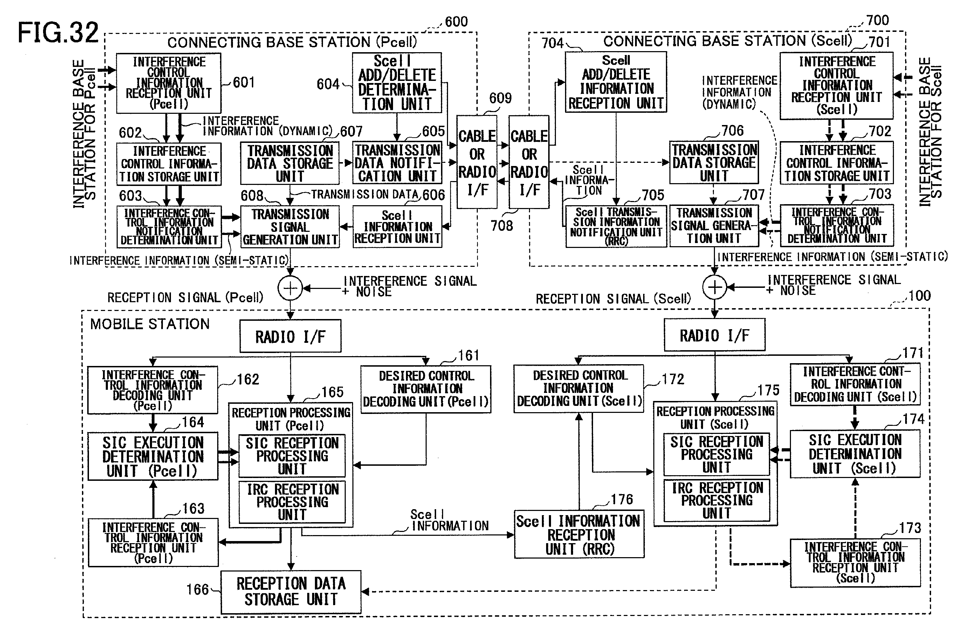

The interference control information reception units (Pcell/Scell) 163, 173 receive transmission control information (Semi-static) of an interference cell transmitted from Pcell/Scell. The interference reduction execution determination units (Pcell/Scell) 164, 174 determine whether to perform interference reduction processing (SIC or IRC, SIC is shown as an example in Figs. 30 and 32) for the received signal. The reception processing units (Pcell/Scell) 165, 175 decode data for the received signal. When performing interference reduction processing, data is decoded by applying interference reduction (SIC or IRC) reception processing. The reception data storage unit 166 is a memory for storing decoded received data. The Scell information reception unit (RRC) 176 receives Scell control information (RRC) from the reception processing unit (Pcell/Scell) 165.

The IRC receiver in the reception processing units (Pcell/Scell) 165, 175 may be replaced with a receiver (IRC Type 2 and the like) that does not require interference control information, so that the interference reduction execution determination units (Pcell/Scell) 164, 174 may determine whether to perform SIC or that IRC.

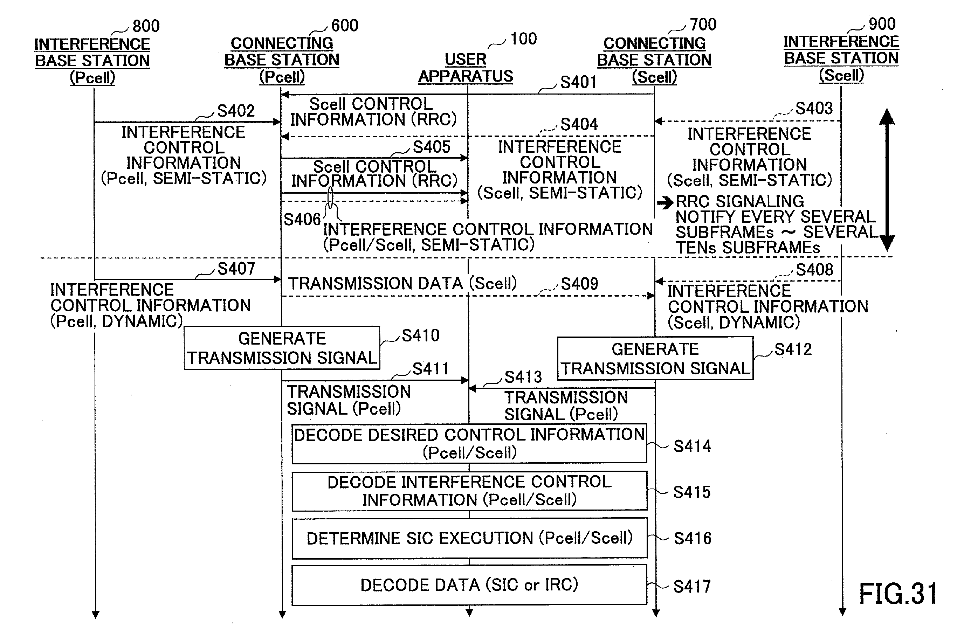

Next, an operation example of the communication system shown in Fig. 30 is described with reference to a sequence diagram shown in Fig. 31. In the example of Fig. 31, there are an interference base station 800 (Pcell) and an interference base station 900 (Scell) in addition to the connecting base station 600 (Pcell) and the connecting base station 700 (Scell).

In the phase of RRC signaling, the connecting base station 700 (Scell) transmits an Scell control information (RRC) to the connecting base station 600 (Pcell) (step 401). Also, the interference base station 800 (Pcell) transmits interference control information (Scell, semi-static) to the connecting base station 600 (Pcell) (step 402), and the interference base station 900 (Scell) transmits interference control information (Scell, semi-static) to the connecting base station 700 (Scell) (step 403).

The connecting base station 700 (Scell) transmits interference control information (Scell, semi-static) to the connecting base station 600 (Pcell) (step 404).

On the other hand, the connecting base station 600 (Pcell) notifies the user apparatus 100 of Scell control information (RRC) (step 405), and notifies the user apparatus 100 of interference control information (Pcell/Scell, semi-static) (step 406).

In the phase of dynamic transmission and reception, the interference base stations (Pcell/Scell) 800, 900 transmit interference control information (dynamic) to the connecting base stations (Pcell/Scell) 600, 700 respectively (step 407, 408). Also, the connecting base station 600 (Pcell) transmits transmission data (Scell) to the connecting base station 700 (Scell) (step 409).

The connecting base stations (Pcell/Scell) 600, 700 perform transmission signal generation respectively (step 410, 412) so as to transmit a transmission signal to the user apparatus 100 (step 411, 413).

Then, the user apparatus 100 decodes desired control information (Pcell/Scell) (step 414), decodes interference control information (Pcell/Scell) (step 415) and performs interference reduction execution determination (Pcell/Scell) (step 416). Based on the result, the user apparatus 100 performs data decoding (execute interference reduction processing, or not execute interference reduction processing) (step 417). In the interference reduction execution determination, for example, it can be determined to perform interference reduction for an interference signal for which there is interference control information. Also, when receiving the OFF notification, it is determined not to perform interference reduction processing that requires interference control information.

Fig. 32 shows a system configuration diagram in a case where the user apparatus 100 establishes an RRC connection also to the Scell. Although the configuration shown in Fig. 32 is similar to the configuration shown in Fig. 30, flow of signals is different. In the case of Fig. 32, since the user apparatus 100 establishes an RRC connection also with the connecting base station 700 (Scell), the user apparatus 100 receives interference control information for the Scell from the connecting base station 700 (Scell). That is, semi-static interference control information (Scell) is not notified from the connecting base station 700 to the connecting base station 600.

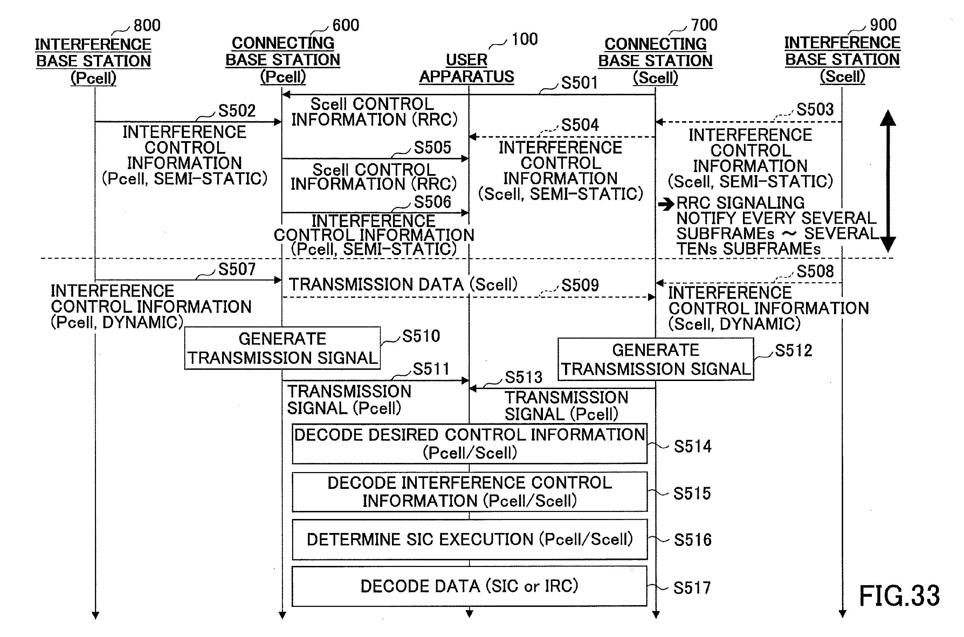

Fig. 33 shows a sequence diagram showing a flow of processes in a case where the user apparatus 100 establishes an RRC connection also with the Scell. In Fig. 33, the interference control information (semi-static) of the Scell is notified from the connecting base station 700 (Scell) to the user apparatus 100 (step 504). Except for this point, the sequence of Fig. 33 is similar to the sequence of Fig. 31.

### (Other apparatus configuration example and the like)

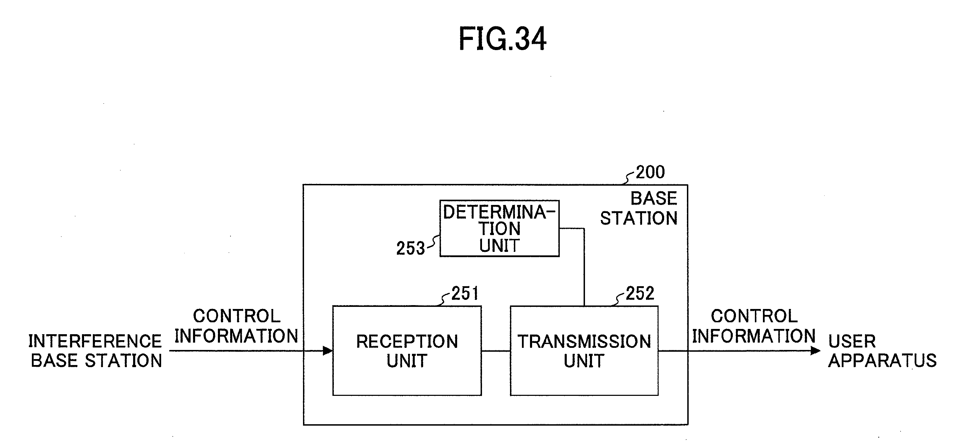

Apparatus configurations described so far are merely examples. For example, the base station 200 may be configured as shown in Fig. 34. The base station 200 shown in Fig. 34 can be configured as a base station configured to communicate with a user apparatus in a radio communication system executing carrier aggregation, including:
a reception unit 251 configured to receive, from an interference base station, control information that is used for the user apparatus to reduce an interference signal from the interference base station for a component carrier used by the user apparatus;
a determination unit 253 configured to determine whether a connecting cell corresponding to the component carrier and an interference cell formed by the interference base station satisfy a predetermined condition; and
a transmission unit 252 configured, when the determination unit determines that the connecting cell and the interference cell satisfy the predetermined condition, to transmit the control information to the user apparatus.

According to the configuration, when the connecting cell and the interference cell satisfy the predetermined condition, control information is transmitted so that the user apparatus can be caused to perform interference reduction processing. Thus, it becomes possible to perform interference reduction processing efficiently in a radio communication system in which carrier aggregation is performed.

The predetermined condition is that, for example, the connecting cell and the interference cell are synchronized, or that transmission methods in the connecting cell and the interference cell are the same.

According to the configuration, when the connecting cell and the interference cell are synchronized, or when transmission methods in the connecting cell and the interference cell are the same, control information is transmitted so that the user apparatus can be caused to perform interference reduction processing. Thus, it becomes possible to perform interference reduction processing efficiently in a radio communication system in which carrier aggregation is performed.

By the way, in the present embodiment, as control information, control information used for reducing a signal of a data channel that becomes interference is mainly described. However, this is an example, and control information is not limited to this. The control information may be control information used for reducing a signal of a control channel that becomes interference from an interference base station for the user apparatus. By this control information, the user apparatus can reduce interference against a desired control signal.

The transmission unit 252 is configured, for example, to transmit the control information to the user apparatus by a downlink physical layer signaling channel (PDCCH) as downlink control information, or to transmit the control information to the user apparatus by an RRC signaling. By configuring in this way, the control information can be transmitted dynamically or semi-statically.

The base station transmits, for example, the control information, to be notified by the RRC signaling, to another base station that communicates with the user apparatus using a component carrier different from the component carrier. According to this configuration, even when the base station cannot perform transmission by the RRC signaling, the base station can transmit control information semi-statically.

The downlink control information includes predetermined information based on a predetermined format, and, when transmitting the control information as the downlink control information, the transmission unit 252 replaces a part of information in the predetermined information in the downlink control information with a part of the control information, and transmits the downlink control information where replacement is performed to the user apparatus. According to this configuration, a region of the downlink control information (DCI) can be utilized effectively.

When there is no interference cell that satisfies the predetermined condition, the transmission unit 252 may transmit, to the user apparatus, a notification instructing not to execute processing for reducing the interference signal.

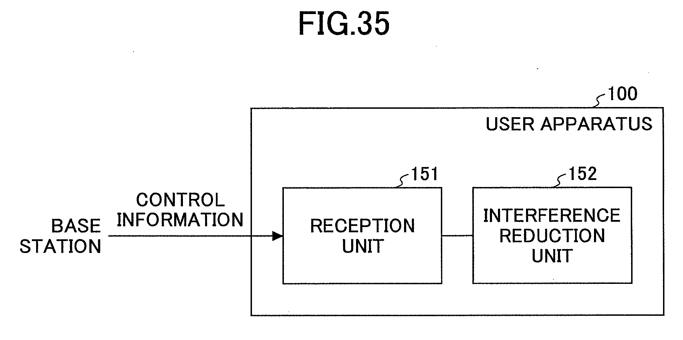

Also, the user apparatus 100 may be configured as shown in Fig. 35. The user apparatus 100 shown in Fig. 35 is a user apparatus in a radio communication system that includes a plurality of base stations and that executes carrier aggregation, including:
a reception unit 151 configured to receive, from a connecting base station that communicates with the user apparatus, control information that is used for reducing an interference signal from an interference base station for a component carrier in the carrier aggregation; and
an interference reduction unit 152 configured to reduce the interference signal by using the control information to obtain a desired signal transmitted by using the component carrier.

The reception unit 151 is configured, for example, to receive the control information from the connecting base station as downlink control information (DCI) that is transmitted by a downlink physical layer signaling channel, or to receive the control information from the connecting base station by an RRC signaling. Accordingly, the user apparatus 100 can receive control information dynamically or semi-statically.

The downlink control information includes predetermined information based on a predetermined format, and a part of information in the predetermined information is replaced with a part of the control information in the downlink control information received from the connecting base station, and wherein, when receiving the control information as the downlink control information, the interference reducing unit 152 uses the replaced information as the part of the control information. According to this configuration, a region of the downlink control information can be utilized effectively.

The use apparatus described in the present embodiment may include a CPU and a memory and may be realized by executing a program by the CPU (processor), or may be realized by hardware such as hardware circuits including logics of processing described in the present embodiment, or may be configured by coexistence of a program and hardware.

The base station described in the present embodiment may include a CPU and a memory and may be realized by executing a program by the CPU (processor), or may be realized by hardware such as hardware circuits including logics of processing described in the present embodiment, or may be configured by coexistence of a program and hardware.

In the above, each embodiment of the present invention has been explained. However, the disclosed invention is not limited to the embodiments. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the user apparatus and the base station have been explained by using functional block diagrams. However, such apparatus may be implemented in hardware, software, or a combination thereof.

The software executed by a processor provided in the user apparatus and the software executed by a processor provided in the base station according to an embodiment of the present invention may be stored in any proper storage medium such as a Random Access Memory (RAM), a flash memory, a Read Only Memory (ROM), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the spirit of the present invention.

The present international patent application claims priority based on Japanese patent application No. 2014-006616, filed in the JPO on January 17, 2014 and Japanese patent application No. 2014-059257, filed in the JPO on March 20, 2014, and the entire contents of the Japanese patent application No. 2014-006616 and the Japanese patent application No. 2014-059257 are incorporated herein by reference.

### DESCRIPTION OF REFERENCE SIGNS

100, 110 user apparatus
200, 300, 400, 410, 420, 500, 600, 700, 800, 900 base station
151 reception unit
152 interference reduction unit
161, 171 desired control information decoding unit (Pcell/Scell)
162, 172 interference control information decoding unit (Pcell/Scell)
163, 173 interference control information reception unit (Pcell/Scell)
164, 174 interference reduction execution determination unit (Pcell/Scell)
165, 175 reception processing unit (Pcell/Scell)
166 reception data storage unit
176 Scell information reception unit (RRC)
251 reception unit
252 transmission unit
253 determination unit
601 interference control information reception unit (Pcell)
602 interference control information storage unit
603 interference control information notification determination unit
604 Scell add/delete determination unit
605 transmission data notification unit
606 Scell information reception unit
607 transmission data storage unit
608 transmission signal generation unit
609,708 I/F
701 interference control information reception unit (Scell)
702 interference control information storage unit
703 interference control information notification determination unit
704 Scell add/delete information reception unit
705 Scell transmission information notification unit (RRC)
706 transmission data storage unit
707 transmission signal generation unit

## Claims

1. A base station configured to communicate with a user apparatus in a radio communication system executing carrier aggregation, comprising:
a reception unit configured to receive, from an interference base station, control information that is used for the user apparatus to reduce an interference signal from the interference base station for a component carrier used by the user apparatus;
a determination unit configured to determine whether a connecting cell corresponding to the component carrier and an interference cell formed by the interference base station satisfy a predetermined condition; and
a transmission unit configured, when the determination unit determines that the connecting cell and the interference cell satisfy the predetermined condition, to transmit the control information to the user apparatus.

2. The base station as claimed in claim 1, wherein the predetermined condition is that the connecting cell and the interference cell are synchronized.

3. The base station as claimed in claim 1 or 2, wherein the predetermined condition is that transmission methods in the connecting cell and the interference cell are the same.

4. The base station as claimed in any one of claims 1-3, wherein the transmission unit is configured to transmit the control information to the user apparatus by a downlink physical layer signaling channel as downlink control information, or to transmit the control information to the user apparatus by an RRC signaling.

5. The base station as claimed in claim 4, wherein the base station transmits the control information, to be notified by the RRC signaling, to another base station that communicates with the user apparatus using a component carrier different from the component carrier.

6. The base station as claimed in any one of claims 1-5, wherein, when there is no interference cell that satisfies the predetermined condition, the transmission unit transmits, to the user apparatus, a notification instructing not to execute processing for reducing the interference signal.

7. A user apparatus in a radio communication system that includes a plurality of base stations and that executes carrier aggregation, comprising:
a reception unit configured to receive, from a connecting base station that communicates with the user apparatus, control information that is used for reducing an interference signal from an interference base station for a component carrier in the carrier aggregation; and
an interference reduction unit configured to reduce the interference signal by using the control information to obtain a desired signal transmitted by using the component carrier.

8. The user apparatus as claimed in claim 7, wherein the reception unit is configured to receive the control information from the connecting base station as downlink control information that is transmitted by a downlink physical layer signaling channel, or to receive the control information from the connecting base station by an RRC signaling.

9. An interference reduction control information notification method executed by a base station configured to communicate with a user apparatus in a radio communication system executing carrier aggregation, comprising:
a reception step of receiving, from an interference base station, control information that is used for the user apparatus to reduce an interference signal from the interference base station for a component carrier used by the user apparatus;
a determination step of determining whether a connecting cell corresponding to the component carrier and an interference cell formed by the interference base station satisfy a predetermined condition; and
a transmission step of, when it is determined that the connecting cell and the interference cell satisfy the predetermined condition in the determination step, transmitting the control information to the user apparatus.

10. An interference reduction method executed by a user apparatus in a radio communication system that includes a plurality of base stations and that executes carrier aggregation, comprising:
a reception step of receiving, from a connecting base station that communicates with the user apparatus, control information that is used for reducing an interference signal from an interference base station for a component carrier in the carrier aggregation; and
an interference reduction step of reducing the interference signal by using the control information to obtain a desired signal transmitted by using the component carrier.
